# EUROPEAN PATENT APPLICATION

(11) **EP 4 221 466 A1**
(43) Date of publication of application: **02.08.2023**
(21) Application number: 23154233.3
(22) Date of filing: 31.01.2023
(51) Int. Cl.: H05B 47/115, G08B 13/24, H04W 84/12

(54) **WI-FI RETROFIT MODULE**

(30) Priority: 01.02.2022 GB 202201286; 21.03.2022 GB 202203964
(71) Applicant: Nami Ai Pte Ltd, 039190 Centennial Tower 17.05 (SG)
(72) Inventor: LEROY, Jérôme, 039190 Centennial Tower (SG)
(74) Representative: Driver, Virginia Rozanne

(57) **Abstract**

Systems and methods are provided for retrofitting a Wi-Fi sensing module into a housing of a switch or socket. A cover is removed from the housing to reveal a space comprising an electrical wire. A Wi-Fi sensing module is inserted into the space and connected to the electrical wire. The cover is then secured to the housing to fully conceal the Wi-Fi sensing module.

## Description

### Technical Field

The present invention relates to Wi Fi modules for implementing a Wi-Fi sensing system and a method of installing Wi-Fi modules.

### Background

Wi-Fi, one of the most commonly used wireless network protocols, is typically associated with wireless internet access and local area networking of devices. The growth in number of Wi-Fi enabled networks around the world to comprise of tens of billions of connected devices has opened up a new range of possibilities for application of Wi-Fi technology other than providing wireless internet access and communication. One promising and tangible application of Wi-Fi signals is that of using it for motion sensing.

Wi-Fi Sensing has been developed over recent years as an alternative way to monitor places. It has various advantages over other sensing solutions. In some forms, it does not need any extra hardware but can rely on existing Wi-Fi routers and Wi-Fi enabled devices in a place. For example, active radar systems require dedicated antennas and transceivers that are complex and costly, while Wi-Fi sensing uses existing devices like cell phones, PCs, and mesh Wi-Fi systems. A user need only to install the required software to transform their setup into a Wi-Fi sensing solution.

Wireless signals, for example Wi-Fi signals, can be used to sense an entity by monitoring changes in signal characteristics. The use of wireless signals in presence detection has the advantage that no cameras need to be used, and therefore the privacy of those being sensed is maintained.

Wi-Fi signals penetrate through walls, enabling out of line-of-sight (LOS) operation, an important consideration for security monitoring applications.

Wi-Fi sensing is innately cost-effective due the near-ubiquitous nature of Wi-Fi. Wi-Fi is widespread, so the infrastructure is already in place. There is no need to build a new ecosystem because the IoT (Internet of Things) provides the perfect ecosystem for a sensing system.

Wi-Fi sensing has been found to be surprisingly accurate. Channel State Information (CSI) is collected from the packets and signals used for transmitting and receiving information from regular devices connected via a Wi-Fi network. This technology does not require any additional specialized signals, nor does it degrade network performance or the user experience when using Wi-Fi.

As mentioned above, Wi-Fi sensing has been found to be an advantageous technology in a number of different scenarios. However, in order to optimise the benefit of a Wi-Fi sensing system, the Wi-Fi sensing chips themselves need to be installed in the environment to be sensed in a manner which maximises the ability of the Wi-Fi sensing system to achieve its objectives. Presently, dedicated Wi-Fi devices are placed in an environment, and connected to electrical power by additional wiring in that environment. Moreover, Wi-Fi sensing chips are not always located in the optimum place in the environment to achieve the Wi-Fi sensing objectives.

### Summary

According to the present disclosure, there is provided a retrofit Wi-Fi module which can be installed into an existing junction box of a switch, or junction of an electrical socket. The present inventors have noted that in many domestic and commercial environments, a switch is located on entry into a room. Moreover, many switches are located spaced apart from and/or spaced vertically above, an electrical power socket which is located at floor level. The vertical spacing may be something of the order of two metres in many environments. This distance is an appropriate distance for the spacing between two Wi-Fi sensing chips which are operating in a Wi-Fi sensing system for the transmission and reception of Wi-Fi signals between them.

The inventors have devised a retrofit Wi-Fi sensing module which houses a Wi-Fi sensing chip and other circuitry components, the module being retrofittable into an existing switch housing and/or an existing socket housing. The Wi-Fi module comprises a casing which houses a circuit board on which the Wi-Fi sensing chip and additional circuit tree components are mounted in a form factor which enables the circuit board to fit into a casing which is suitable for retrofit installation into a housing space of a switch and/or socket. Note that the electrical components on the circuit board with the Wi-Fi sensing chip differ between a switch retrofit module and a socket retrofit module.

According to an aspect of the invention there is provided a method of retrofitting a Wi Fi sensing module into a switch or socket housing, the housing having at least one electrical wire for providing power, the method comprising:
removing a cover from the housing to reveal a space within the housing and the at least one electrical wire;
inserting a retrofittable Wi Fi sensing module into the space and connecting an electrical connector of the Wi Fi module to the at least one electrical wire; and
securing the cover to the housing to fully conceal the Wi Fi sensing module.

The housing may be a switch housing which comprises at least one further electrical wire, the at least one electrical wire and the at least one further electrical wire being connected to provide a power circuit to a device under control by the switch, the switch housing further comprising a toggle for selectively making and breaking the electrical circuit for selectively controlling the delivery of power to a device under control of the switch.

The Wi Fi sensing module may comprise a relay which is connected in the electrical circuit for overriding the toggle switch, the relay under control of circuitry on the Wi Fi sensing module.

The at least one electrical wire may be connected to one connector of the socket and at least one further electrical wire may be connected to another connector of the socket, the method comprising additionally connecting the at least one electrical wire and the further electrical wire to respective connectors of the Wi Fi module to provide power to the Wi Fi module.

When the Wi Fi sensing module is connected into a switch housing, it may take power from the power cables that would normally run to the switch.

Another aspect of the invention provides a method of retrofitting Wi Fi sensing modules in an environment, the environment comprising a switch housing and a socket housing, each of the switch housing and socket housing having at least one electrical wire for providing power, the method comprising:
removing a first cover from the switch housing to reveal a space within the switch housing and the at least one electrical wire of the switch housing;
inserting a first retrofittable Wi Fi sensing module into the space revealed in the switch housing and connecting an electrical connector of the Wi Fi sensing module to the at least one electrical wire of the switch housing;
securing the first cover to the switch housing;
removing a second cover from the socket housing to reveal a space within the socket housing and at least one electrical wire of the socket housing;
inserting a second retrofittable Wi Fi sensing module into the space of the socket housing and connecting an electrical connector of the Wi Fi module to the at least one electrical wire of the socket housing; and
securing the second cover to the socket housing.

Another aspect of the invention provides a retrofittable Wi Fi sensing module comprising:
a casing configured to fit within the space of a switch or socket housing, the casing enclosing Wi Fi sensing module components comprising:
a processor configured to execute Wi Fi sensing software for processing Wi Fi data for the purpose of detecting presence and/or motion in an environment in which the switch or socket housing is located;
an antenna for transmitting and receiving Wi Fi data between the Wi Fi sensing module and the environment; and
an electrical connector for connecting the Wi Fi sensing module to the at least one electrical wire of the housing.

The retrofittable Wi Fi sensing module may comprise a relay connected in an electrical circuit for controlling a device connected in the circuit and external of the housing.

The relay may be controlled by the processor under the operation of the Wi Fi sensing software executed by the processor. In certain embodiments, user gestures may be sensed to control the device, with such gestures being associated with particular audio signals (e.g., 'clicks').

The retrofittable Wi-Fi sensing module may comprise an NFC (Near Field Communication) chipset. This enables the module to be identified for commissioning by proximity remote detection even where it is housed in a switch or socket cavity. When housed in a cavity, it can be problematic to use a QR code (which is another means of identifying the module if accessible). Identification by a Bluetooth connection is also possible, but in some scenarios an NFC link is more accurate for geolocation.

The retrofittable Wi Fi sensing module may comprise an audio feedback generator configured under the control of the processor for generating audio feedback responsive to sensed activity (such as a gesture) of a user.

The audio feedback generator may be configured to generate audio feedback responsive to actions of the relay.

The audio feedback generator may comprise a clicker operable to generate clicks at a variable and controllable frequency. The Wi Fi sensing module components may be mounted on a circuit board having planar dimensions of no greater than 50 mm by 50 mm. In certain cases the module dimensions are no greater than 42mm × 42 mm.

The Wi Fi sensing module components may be mounted to a circuit board.

Another aspect of the invention provides a method of controlling a power supply to a device, the method comprising:
receiving at an antenna Wi Fi sensing data of an environment in which the device is located;
processing the Wi Fi sensing data to recognise one or more gesture made by a user in the environment;
based on the recognised gesture, controlling the actions of an electrical relay to interrupt the power supply to the device.

The step of processing the Wi Fi sensing data may be performed in a processor which is housed within a casing fitted into a switch housing of the environment, the relay overriding control of the device by a toggle control of the switch.

The device may comprise one of lighting, heating, air conditioning , curtains / blinds, sound system (AV), Air purifier.

### Brief Description of the Drawings

To assist understanding of embodiments of the present disclosure and to show how such embodiments may be put into effect, reference is made, by way of example only, to the accompanying drawings in which:
Figure 1 is a schematic diagram of an exemplary retrofit Wi-Fi sensing module.
Figure 2 shows the same exemplary retrofit Wi-Fi sensing module from a front-on angle.
Figure 3 shows a Wi-Fi module 1 implemented in an electrical switch.
Figure 3a shows a second example of a Wi-Fi module 1 implemented in an electrical switch.
Figure 4 shows a Wi-Fi module 1 implemented in an electrical socket.
Figure 4a shows a second example of a Wi-Fi module 1 implemented in an electrical socket.
Figure 5 shows an exemplary circuit board layout for a retrofit Wi-Fi sensing module.
Figure 6 shows an alternative embodiment of a circuit board of a retrofit Wi-Fi sensing module, comprising a single-core Wi-Fi chip.
Figure 7 shows a side view of the Wi-Fi sensing chip of Figure 5.
Figure 8 shows another alternative embodiment of a circuit board of a retrofit Wi-Fi sensing module, which does not comprise a relay or wire interface.
Figure 9 shows a wiring diagram for a Wi-Fi module intended for implementation in a switch housing.
Figure 10 shows a wiring diagram for a Wi-Fi module intended for implementation in a plug socket housing.
Figure 11 is a schematic diagram of a presence detection system.
Figure 12 is a schematic diagram of a mesh network within an indoor environment.
Figures 13A-C schematically illustrate signal variations due to the presence or non-presence of entities in a room.
Figure 14 shows a mesh network topology.
Figures 15A-C show different node layouts within the indoor environment.
Figure 16 is an example method for implementing a security event or an environment automation event based on a received signal.
Figure 17 schematically illustrates an entity disrupting multiple signals.
Figure 18 is an example method for triggering a security event based on multiple signals.
Figure 19 is an example method for updating characteristic data.
Figure 20 shows how the Wi-Fi module is connected to components of a switch.
Figure 20a shows how the Wi-Fi module is connected to components of a socket.
Figure 21 shows an exemplary mesh Wi-Fi device comprising a socket portion.

### Detailed Description

Wi-Fi Sensing is a technology that uses Wi-Fi signals to operate like a short-range passive radar by measuring how the signals interact with movement and the environment. By transmitting signals into the environment, Wi-Fi sensing systems can track motion and presence based on how the signals are reflected and deflected.

Wi-Fi sensing performance is correlated to channel width. The larger the channel width, the higher the resolution. Currently, Wi-Fi works in 2.4 GHz, 5 GHz, 6 GHz, and 60GHz bands. Channel width in the 2.4 GHz spectrum is 20 MHz or 40MHz, 5 GHz is 20 MHz, 40 MHz, 80 MHz, or 160 MHz, and 6 GHz band can be up to 1200 MHz (Wi-Fi 6E). The wavelengths of the Wi-Fi signal in these bands span from 4.2 cm (6 GHz band) to 12.4 cm (2.4 GHz band).

Such signals are well suited for motion detection, activity detection, and recognition of human bodies as well as the breathing rate and even heartbeat detection through DSP (digital signal processing), machine learning algorithms and other processing techniques. Wi-Fi sensing technology enables security, safety, and family care services in smart home and internet of things (IoT) applications. It supports a variety of features and applications such as motion detection, human activity detection and recognition and vital signs detection.

One problem that arises is how to install Wi-Fi sensing chips in an environment so that they are useful in one or more use cases of a Wi-Fi sensing system. Use cases can include security, automation, wellness and pet monitoring, amongst others. In addressing this problem, the inventors have also devised a solution to energy management in environments by enabling 'soft control' of devices normally controlled by switches.

As described in the following, the inventors have devised a retrofit Wi-Fi module. The module may be retrofitted into a housing of an existing switch and/or the housing of an existing socket as described more fully herein. The switch may control any kind of device. For example, the switch may be a light switch for controlling lighting in a room. Alternatively, the switch may control heating, air conditioning, blinds and other window coverings, volume control of an audio system etc. All that is required is that the switch has a removable front cover and a cavity within which the module may be placed. In many rooms, it will be appropriate to place a retrofit Wi-Fi module into each of a switch housing and a socket housing. In this way, a Wi-Fi sensing system may be configured in the room. For example, a mesh Wi-Fi sensing network may be set up in an environment. A mesh Wi-Fi sensing network is described more fully in our PCT application No. PCT/SG2022/050621, the contents of which are herein incorporated by reference. For the sake of completeness, one example of a mesh Wi-Fi sensing network is described later.

Note, however, that the Wi-Fi sensing system does not need to be a mesh Wi-Fi network, but any Wi-Fi sensing system could be configured by retrofitting the Wi-Fi modules of the present invention into switches and/or sockets.

The inventors have recognized that in many places a switch is particularly appropriate as a location for a Wi-Fi sensing module, because many switches are located on entry into a room or place, and at shoulder level. Having a Wi-Fi sensing module at shoulder level is an ideal height for the module to detect a person moving past the Wi-Fi sensing module in such a way as to interrupt the Wi-Fi signal for the purposes of detecting presence and/or motion of that person.

A further advantage arises from retrofitting the Wi-Fi module into a switch. The Wi-Fi module is wired into the electrical circuit such that it controls the operation of the device which the switch was controlling by its toggle switch. This enables the device to be subject to a soft control using the Wi-Fi sensing chip, rather than the control of the toggle on the existing switch. Even if a user turns the toggle into the "off' position, this does not disable the Wi-Fi sensing module because it is wired directly into the electrical circuit which supplies the electrical circuit from the source of electricity to the device under control.

In certain embodiments, the Wi-Fi sensing system can be set up to recognise gestures that a user may make to turn a device on or off or to adjust its volume. That is, a user may stand in front of the retrofitted Wi-Fi sensing module and make a particular gesture with his hand or body. This gesture is detected and recognised by the Wi-Fi sensing system by processing circuitry which can be located in the Wi-Fi sensing chip itself, or in the Cloud. The type of gesture can be recognised, and appropriate control signals can be directed to the device being controlled by the switch based on the gesture.

As described more fully herein, the retrofit Wi-Fi module comprises an audio feedback device which is operated by the Wi-Fi sensing chip on detection and recognition of the gesture. This enables audio feedback to be given to a user who uses gestures to control the device connected to the switch. for example, as a user moves his hand up, this may denote that the power should be increased to the device, and the audio feedback device may generate one or more "clicks" or other audio sounds to provide feedback to a user that his gesture has been detected and recognised. In certain embodiments, the audio feedback device may increase the speed at which the sounds are emanated and may have an increased sound frequency of continuous tone when a maximum or a minimum power level is reached based on the gesture recognition.

As described more fully herein, the Wi-Fi sensing chip constitutes a sensing node. The Wi-Fi sensing chip may execute one or more software programs to implement a node. For example, it may implement a sensing engine and additional gesture detection and recognition programs. Alternatively, the node may implement a sensing engine and a program which enables data to be transmitted from the node to the Cloud such that the Cloud can perform gesture detection and recognition.

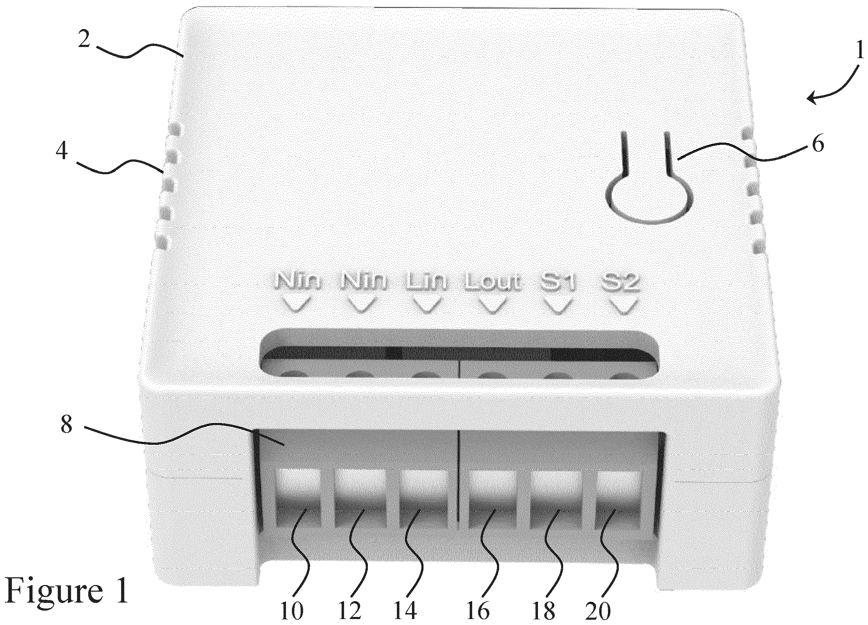

Figure 1 shows one example of a retrofit Wi-Fi module 1. The Wi-Fi module 1 comprises a casing 2, which may have dimensions of 42 mm × 42 mm and a circuit board mounted within the casing 2. The dimensions of the casing are determined by the housing within which the retrofit module is to be fitted. For many scenarios, the housing comprises the existing space defined by a wall mounted electrically powered switch or electrical socket. The dimensions of 42 mm × 42mm are suitable for many domestic and commercial existing switches/sockets. The circuit board may be designed and arranged according to any of the embodiments described herein.

Practical applications of the retrofit Wi-Fi module 1 may include mounting, affixing or otherwise positioning the Wi-Fi module 1 within a separate housing, suitable examples of which are described later herein, so as to enable an environment for Wi Fi sensing. The casing 2 may comprise textural features for ease of handling, or for improved grip or mounting stability when the Wi-Fi module 1 is positioned in the separate housing. For example, the exemplary casing 2 of Figure 1 includes two rows of parallel ribs 4, the rows 4 respectively located on the left- and right-hand faces of the casing 2. Each rib in each row 4 runs vertically down at least a portion of its respective face of the casing 2, and each row 4 of parallel ribs extends along a portion of its respective face. It will be appreciated that other types of textures may be applied to faces of the casing, that textures may be applied to faces other than those shown to be texturised in Figure 1, and that textures may be applied for purposes other than that described above. One additional example of casing texture is described later, also with reference to Figure 1.

Though not shown in Figure 1, the casing 2 of the Wi-Fi module 1 may further comprise one or more exterior protruding plates or brackets, which may be used in conj unction with a suitable fixing to mount the module, for example within a separate housing. In some embodiments, the one or more plates or brackets may be integrated into the casing 2 of the Wi-Fi module 1. Alternatively, the casing 2 may include features which allow separate, non-integrated brackets to be affixed to the casing 2 for the same purpose.

The exemplary module 1 shown in Figure 1 further shows openings or holes located on the top and front faces of the casing 2. In the example of Figure 1, the openings in the top and bottom faces expose and enable physical access to corresponding top and front faces of a wire interface 8, which is mounted on the circuit board within the Wi-Fi module 1. Note that the positioning of the wire interface 8 on the circuit board is such that the wire interface is accessible from, and exposed on, both the front face and the top face of the casing 2. The wire interface 8 in Figure 1 includes six wire terminals 10, 12, 14, 16, 18 and 20. The exemplary casing 2 of Figure 1 further includes a plurality of textured features on its top face, the plurality of textured features positioned adjacent to - and running parallel to - the above-described opening on the top face of the casing 2. Each one of the plurality of textured features on the top face of the casing 2 identifies and marks a position of a corresponding one of the wire terminals 10-20 of the wire interface 8.

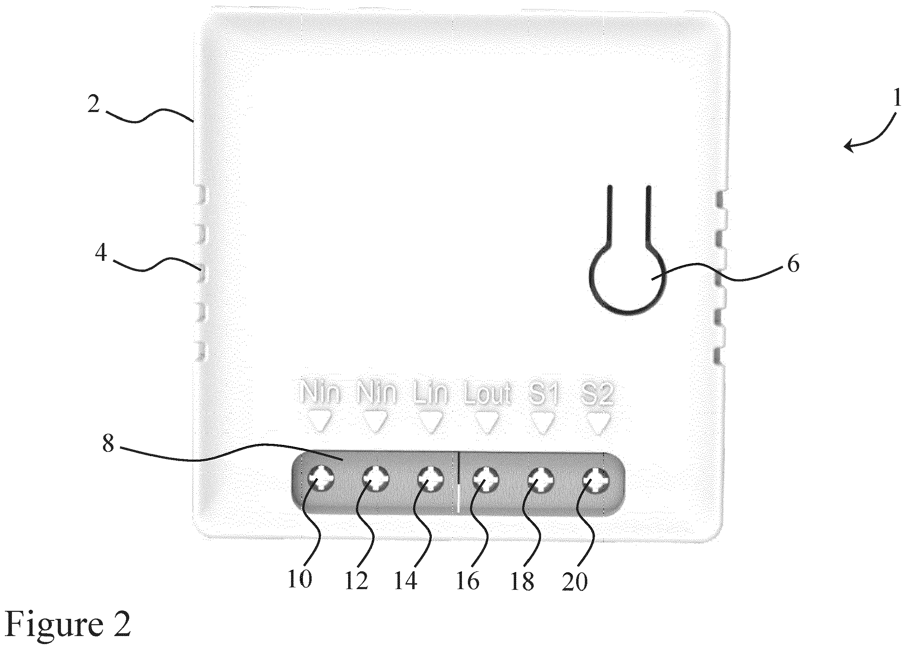

Figure 2 shows the same exemplary Wi-Fi module 1 as is shown in Figure 1. In Figure 2, the Wi-Fi module is shown directly from above, showing only the top face of the casing 2 and the top of the wire interface 8, which is visible through the opening in the top face of the casing 2.

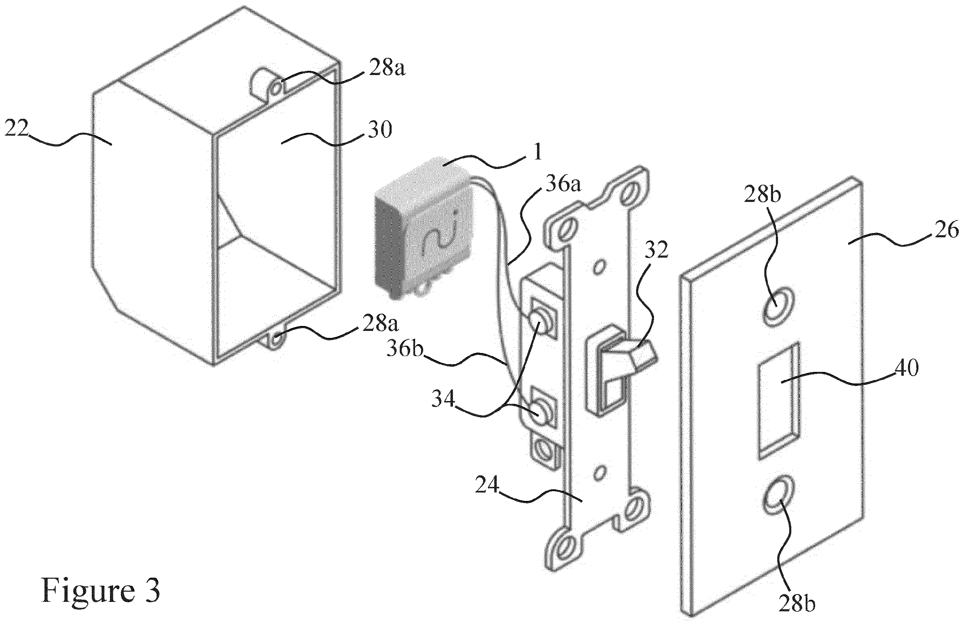

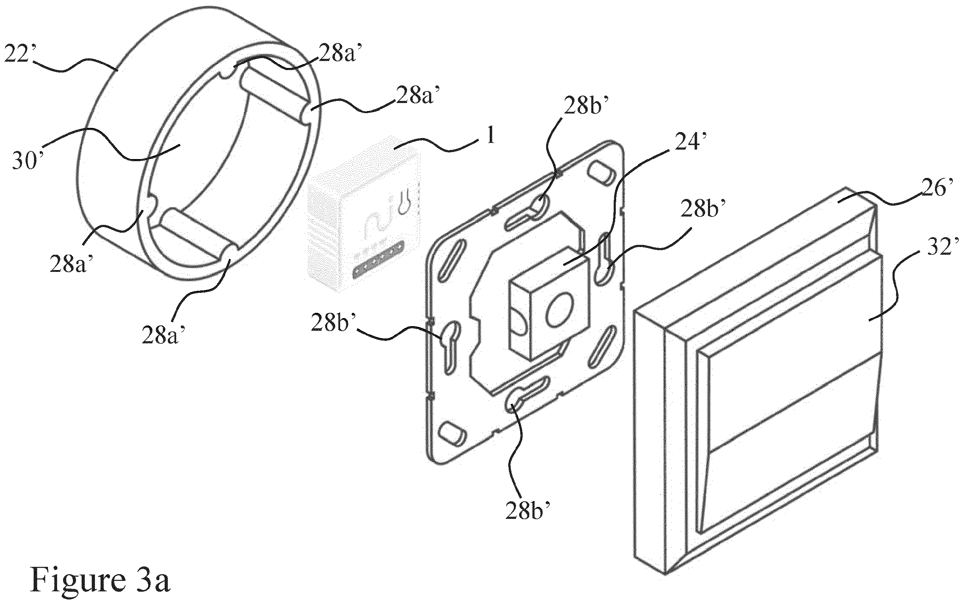

Figure 3 is a schematic diagram showing a Wi-Fi module 1 implemented in an electrical switch. The figure is shown deconstructed to illustrate how the Wi-Fi module is retrofitted to an existing switch. The configuration in Figure 3 shows an existing switch housing body 22, an existing switch mechanism 24, an existing switch housing front plate 26, and the retrofit Wi- Fi module 1.

In an existing switch, such as shown in Figure 3, the housing body 22 is a hollow three-dimensional shell which houses, within a cavity 30, the switch mechanism 24. The housing body 22 is configured such that the front plate 26 may be affixed to the housing body 22 with the switch mechanism 24 in the cavity 30 of the housing body 22. In the example of Figure 3, the housing body 22 includes a plurality of integrated brackets 28a and the front plate 26 comprises a corresponding number of holes 28b, through which a fixing may be passed to mount the front plate 26 to the housing body 22.

The switch mechanism 24 may similarly be affixed, either to the front plate 26 or, in other embodiments, to the housing body 22. The switch mechanism 24 includes a toggle switch 32, the function of which is described later. The toggle 32 protrudes from a front face of the switch mechanism 24. The front plate 26 includes a toggle window 40, a hole through which the toggle 32 protrudes when the front plate 26 is affixed to the housing body 22 with the switching mechanism 24 housed therein.

The toggle 32 which may be set in one of two positions. The switch mechanism 24 may be configured such that each position of the toggle determines an electrical state of one or more electrical circuit associated with the switch mechanism 24; e.g., "on" or "off'. In the example of Figure 3, two circuit terminals 34 are located on an exterior of a side face of the switch mechanism 24. In existing switches, each of the circuit terminals 34 on the switch mechanism 24 are respectively connected to livewires 36a and 36b from an electricity supply so that the toggle 32 can connect or disconnect electricity from a device being controlled by the switch. Figure 3 additionally illustrates how the retrofit Wi-Fi module is fitted into the switch. The front plate is unscrewed to reveal the cavity in the housing, into which the Wi-Fi module is inserted. The terminals 34 are disconnected from the live wires and are connected respectively to wire terminals in the wire interface 8 of the Wi-Fi module 1.

The Wi-Fi module 1 is connected within a circuit associated with the switch mechanism 24 such that control of electricity around the circuit is ultimately controlled by the Wi-Fi module 1, and not by the toggle 32. Even if a user turns the toggle 32 'off', the Wi-Fi module will still be able to control operation of the device under control.

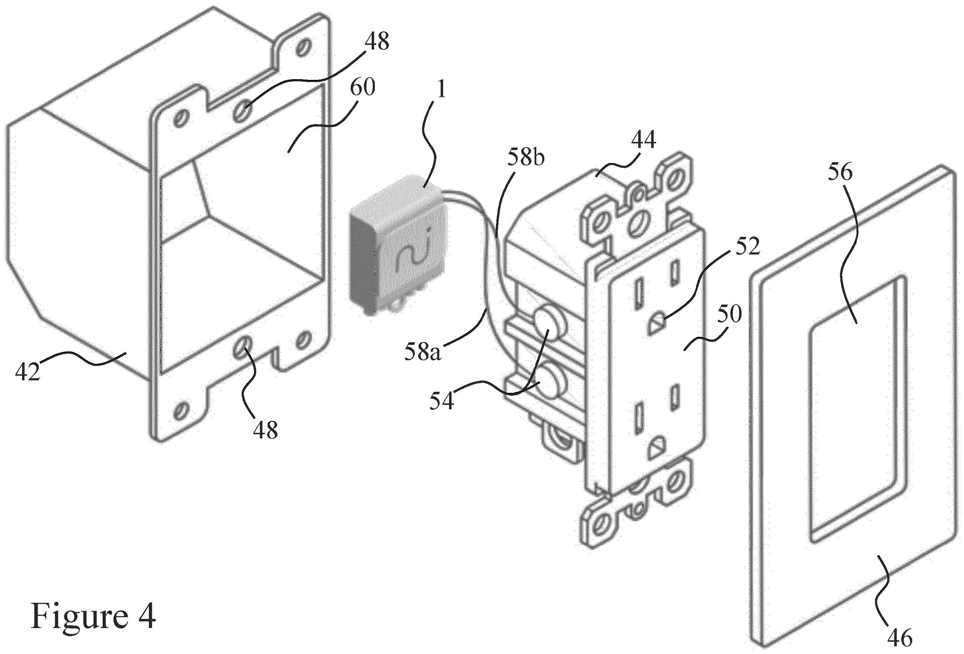

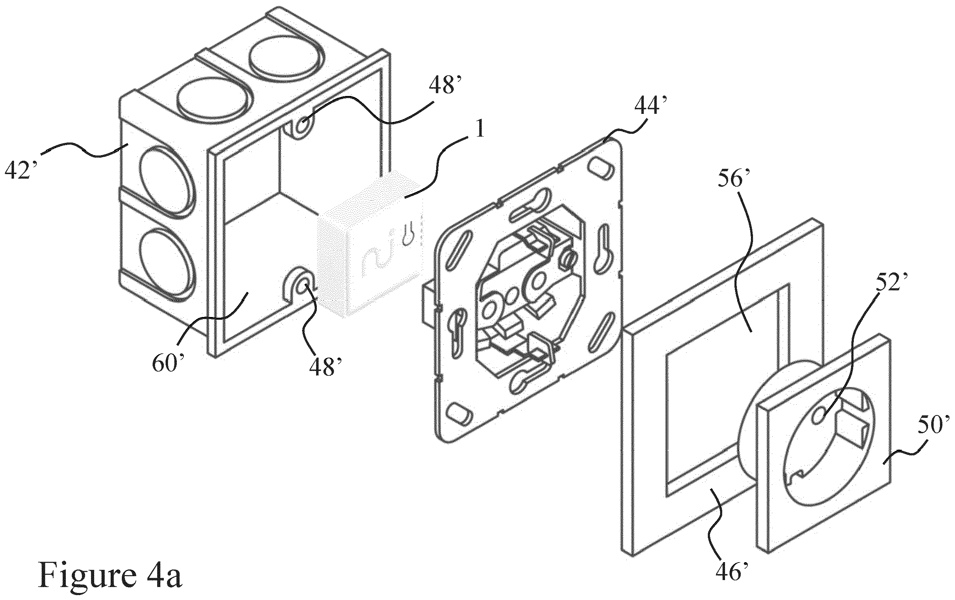

Note that in the above examples, the housing body 22 may have been designed with the intention only to house a switch mechanism 24 within the cavity 30. The Wi-Fi module 1 may be installed such that it is affixed or otherwise positioned within a portion of the cavity 30 that is not occupied by the switch mechanism. An aftermarket installation of the Wi-Fi module 1, such as is described above, is referred to herein as "retrofitting". It will be appreciated that physical features of the Wi-Fi module 1 described herein, for example the casing 2 and the arrangement of the circuit board therein, enable retrofitting in the cavity 30 of a housing body 22 which was not manufactured with the intention of fitting further entities therein. The same applies in the exemplary configuration described in Figure 4.

Figure 3a shows a schematic diagram showing a Wi-Fi module 1 implemented in a second exemplary electrical switch. Reference numerals denoting comparable features to those of Figure 3 are provided with the same reference numeral as in Figure 3, but with a prime symbol, e.g., 42' to denote an existing housing. The switch mechanism may be a two-state toggle or button.

Figure 4 is a schematic diagram showing a Wi-Fi module 1 implemented in an electrical socket. Figure 4 shows the components in a deconstructed state to illustrate how the Wi-Fi module may be retrofitted. The configuration in Figure 4 shows a socket housing body 42, a double socket unit 44, a socket front plate 46, and a Wi-Fi module 1. The Wi-Fi module is `retrofitted' into the electrical socket in a similar fashion to that which has been described above with reference to Figure 3.

In Figure 4, the socket housing body 42 is a hollow three-dimensional shell which houses, within a socket cavity 60, the socket unit 44 and the Wi-Fi module 1. The housing body 42 is configured such that the front plate 46 may be affixed to the housing body 42 while the socket unit 44 and the Wi-Fi module 1 are within the cavity 60 of the housing body 42. In the example of Figure 4, the housing body 42 includes a plurality of integrated brackets 48, which may be used to mount the front plate 46 to the housing body 42 with a suitable fixing, for example a screw.

The socket unit 44 may similarly be affixed, either to the front plate 46 or, in other embodiments, to the housing body 42. The socket unit 44 includes a front face 50 comprising two plug sockets 52. The front face 50 of the socket unit 44 is intended to be accessible to a user such that the plug sockets 52 may be used to provide electricity to a user device or appliance. A hole 56 is provided on the socket front plate 46, through which the front face 50 of the socket unit protrudes when the socket front plate 46 is affixed to the housing body 42 with the socket unit 44 housed therein.

Wi-Fi module 1 is connected, by connecting wires 58a and 58b, to respective circuit terminals 54 located on a side face of the socket unit 44; this connection allows the Wi-Fi module 1 to receive power. However, it is important to note that in the example of Figure 4 the Wi-Fi module 1 does not affect any functionality of the socket unit.

The inventors have recognised that, in general, the heights and positions of plug sockets within buildings are also suitable heights and positions at which to mount Wi-Fi-sensing and mesh Wi-Fi devices. In fact, known Wi-Fi sensing and mesh Wi-Fi systems often demand permanent use of one existing plug socket per device in the system. As described previously herein, features of the Wi-Fi module 1, including the casing 2 and the arrangement of the circuit board therein, enable retrofitting in a cavity 30, 60 of a housing body 22, 42 which was not manufactured with the intention of fitting a Wi-Fi module 1 therein. Retrofitting in a socket cavity 60 enables a Wi-Fi module 1 to draw electricity without being directly plugged into a plug socket 52 via the face 50 of the socket unit 44, thus reducing the number of plug sockets 52 required by the Wi-Fi system without compromising on positioning of Wi-Fi devices.

Figure 4A shows a second example of a Wi-Fi module 1 implemented in an electrical socket. Where features and components of the system in Figure 4a have a comparable equivalent in Figure 4, the same reference numeral has been used to denote the comparable feature or component but with a prime symbol; e.g., 46' to denote a front plate.

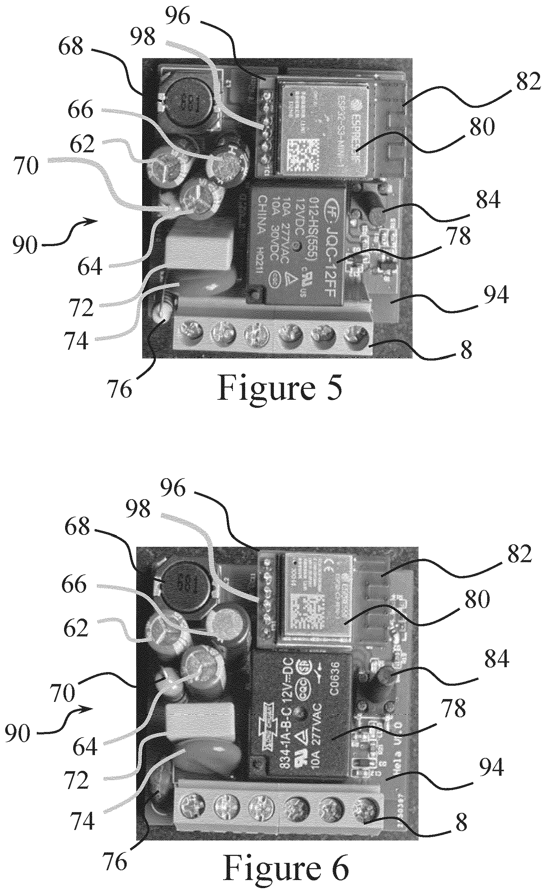

Figure 5 shows a highly schematic diagram of an exemplary Wi-Fi module circuitry 90 of a retrofit Wi-Fi module 1 capable of implementing the Wi-Fi sensing features described herein. The arrangement of components on the Wi-Fi module circuitry 90 of Figure 5 is such that the circuitry 90 may be mounted within a casing 2 intended for retrofitting in an existing housing, such as an existing switch housing body or plug socket housing body. In the following description, the terms `north', 'south', 'east' and `west' may be used to describe the orientation of components in the Wi-Fi module circuitry 90. Note that this is done so that terms such as 'above' or 'underneath' may be used to unambiguously describe orientation of components in a third dimension, perpendicular to the plane of the Wi-Fi module circuitry 90.

The Wi-Fi module circuitry 90 of Figure 5 includes two Printed Circuit Boards (PCBs): a power supply board 94 and a Wi-Fi module adaptor board 96. The power supply board 94 has dimensions of 42 mm × 42 mm. The Wi-Fi module adaptor board 96 may also be referred to as the adaptor board 96 and has dimensions of 20 mm × 17 mm in the example of Figure 5.

The adaptor board 96 of Figure 5 is mounted 12 mm vertically above the power supply board 94, the power supply board 94 and adaptor board 96 being plane parallel.

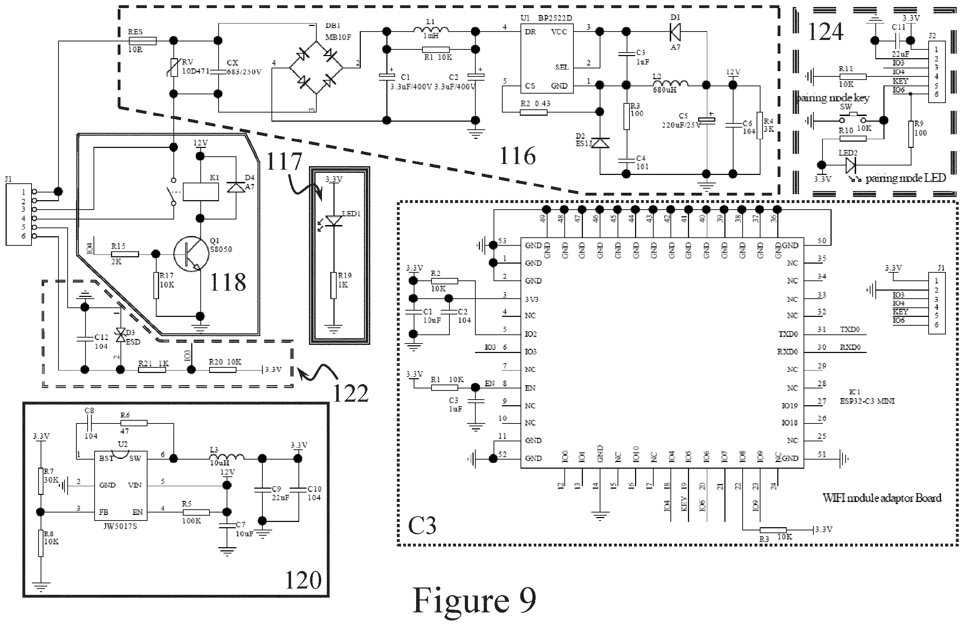

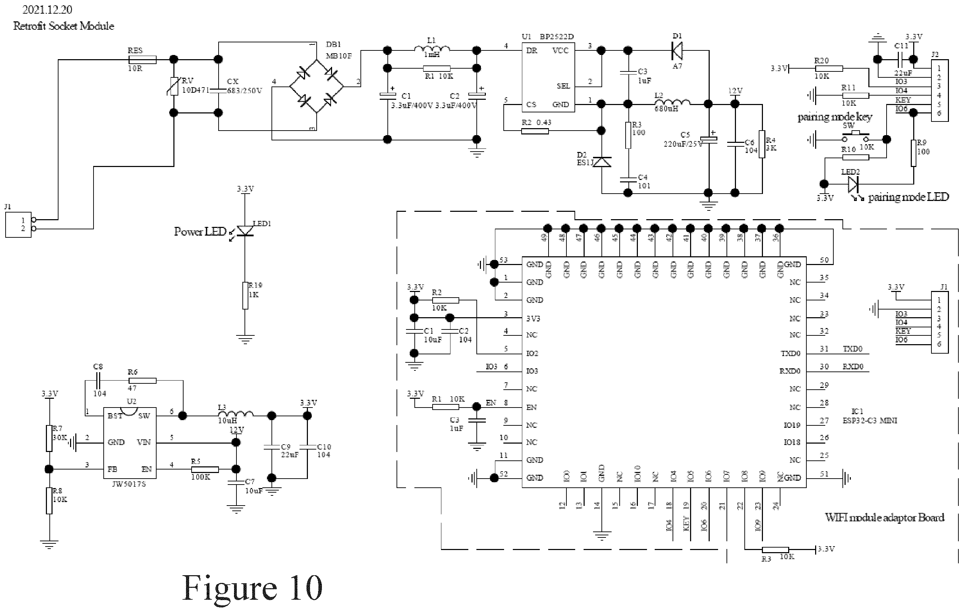

The orientation of components on the power supply board 94 and adaptor board 96 is now described. Note that only the orientations of the largest components on the circuit board are described with respect to Figure 5, as the arrangement of the largest components has the greatest bearing on whether the Wi-Fi module circuitry 90 fits within a casing 2 that can be retrofitted to an existing housing. It will be appreciated that the described components may form part of one or more functional circuit. Examples of the function circuits are shown in Figures 9 and 10 by way of examples only. It will be appreciated that the circuit connections could be made in a variety of different ways.

The adaptor board 96 of Figure 5 comprises a dual-core Wi-Fi chip 80. The dual-core Wi-Fi chip 80 is of a rectangular shape, having surface dimensions of 22mm × 17 mm. Note that an eastern edge of the dual-core Wi-Fi chip 80 is flush with and runs parallel along an eastern edge of the power supply board 94, though the adaptor board 94 on which the Wi-Fi chip 80 is mounted upon is raised vertically from the power supply board, as noted previously. Running in the north-south direction along the western extreme of the adaptor board 96 is a terminal block 98, occupying a portion of the adaptor board of width 3 mm. The dual-core Wi-Fi chip 80 is located to the immediate west of the terminal block 98.

The Wi-Fi chip 80 comprises an integrated antenna 82, which may be configured to transmit and/or receive Wi-Fi signals to facilitate functionalities of the Wi-Fi module 1 described herein. The antenna 82 shown in Figure 5 is provided on an antenna portion of the Wi-Fi chip component 80, which has surface dimensions of 5 mm × 17 mm. In the example of Figure 5, the portion of the Wi-Fi chip 80 on which the antenna 82 is provided is located on an eastern extreme of the Wi-Fi chip 80, such that the eastern edge of the antenna 82 forms an eastern edge of the Wi-Fi chip 80.

The antenna 82 is visible in Figure 5 as an embossed trace of perpendicularly connected lines, which form a repeating square wave pattern down the entire portion of the Wi-Fi chip 80 on which the antenna 82 is provided. Note that the combined lateral width of the terminal block 98 and the Wi-Fi chip 80 is 5 mm greater than the lateral width of the adaptor board 96, on which they are mounted. In the example of Figure 5, the antenna portion of the Wi-Fi chip 80 overhangs the eastern edge of the adaptor board 96.

In a north-west extreme of the power supply board 94 is provided an inductor component 68, having surface dimensions of 10.5 mm × 10.5 mm. The north and west edges of the inductor 68 are flush with and run parallel along portions of the respective north and west edges of the power supply board 94.

Disposed on the power supply board 94 in a triangular arrangement and located immediately south of the inductor 68 are three capacitors 62, 64 and 66, each being a cylindrical capacitor mounted vertically such that a circular top face of each capacitor 62, 64, 66 is parallel to the plane of the power supply board 94. Each circular top face of the capacitors 62, 64, 66 has a diameter of 7.4mm. As described above, the three capacitors 62, 64, 66 are arranged in a triangular arrangement, wherein the centres of the circular faces of the first and third capacitors 62, 66 lie on a notional east-west vector with either a zero or very small component in north- south direction, relative to the longitudinal component. The first and third capacitors 62 and 66 may be longitudinally spaced on the power supply board 94 such that a second capacitor 64 may be positioned therebetween, the position of the face-centre of the second capacitor 64 having a latitudinal offset from the notional vector connecting the centres of the first and third capacitors 62 and 66. The specific triangular arrangement of the three capacitors 62, 64, 66 on the power supply board 94, in particular the amount of longitudinal spacing between the first and third capacitors 62 and 66 and the amount of latitudinal offset of the second capacitor 64, may be chosen to minimise both the lateral and longitudinal dimensions of a notional rectangle enclosing the three capacitors 62, 64, 66. Such an arrangement improves the efficiency with which space on the power supply board 94 is taken up by components thereupon.

As noted previously herein, Wi-Fi sensing and mesh Wi-Fi systems may, among other functionalities, be used to provide an alarm system. Since the exemplary Wi-Fi modules described herein rely on electrical power to operate, the Wi-Fi systems may be vulnerable to power outages. For example, an intruder may turn off an electrical supply to the Wi-Fi system and go undetected. Alternatively, the Wi-Fi system may be vulnerable to a power cut or other non-deliberate loss of power. The capacitors 62, 64 and 66 may form part of a circuit which indicates an alert in the event that a primary source of electrical power is removed in any way. In this way, the Wi-Fi module 1 may report to a user, through an application on a mobile device, that the power supply has been removed.

A first resistor component 70 is positioned immediately south of the first capacitor 62 and to the west of the second capacitor 64. In the example of Figure 5, the first resistor 70 is arranged on the power supply board 94 such that the southern-most extreme of the first resistor 70 is longitudinally aligned with the southern-most extreme of the second capacitor 64. The first resistor 70 is provided to restrict flow of electricity to particular components. The resistance in Ohms (Q) of the first resistor 70 may be selected depending on the specific electrical requirements of the components to which the first resistor 70 is connected. South of the first resistor 70 and the triangular arrangement of capacitors 62, 64 and 66 is disposed a further capacitor 72, having surface dimensions of 11 mm × 5.5 mm and oriented such that the longer edge of the further capacitor72 lies east-to-west along a notional line of latitude on the power supply board 94.

For the purposes of the following description, consider a toroid which is created by rotating a 2-dimensional shape about an axis, with which the surface of the 2-D shape is coplanar. The perimeter of the 2-D shape being rotated runs around a 'poloidal' axis, and the shape is rotated around a 'toroidal' axis to form the 3-dimensional toroid shape. A toroid inductor 74 is located on the power supply board 94 immediately south of the further capacitor72. The toroid inductor 74 is oriented such that the toroidal axis is parallel to a notional north-south line of longitude on the power supply board 94. The diameter of the toroidal axis of the toroid inductor 74 is 11 mm. The width of the toroid inductor 74 in the poloidal direction is 3 mm. For clarity, the maximum respective length, width, and vertical measurements of the toroid inductor are 11 mm × 3 mm × 11 mm.

A second resistor 76 is located in the south-west extreme of the power supply board 94, to the west of the wire interface 8. Note that the second resistor 76, like the first resistor 70, may be provided to restrict flow of electricity in a circuit, and allow an optimal or desirable current and voltage through particular components. The resistance of the second resistor 76 may be higher or lower than that of the first resistor 70, again depending on the specific electrical requirements of the components to which the second resistor 76 is connected.

For clarity, note that the inductor 68, the triangular arrangement of capacitors 62, 64, 66, the first resistor 70, the further capacitor72, the toroid inductor 74 and the second resistor 76 described above are located on a western portion of the power supply board 94.

The wire interface 8, as described with respect to Figures 1 and 2, has surface dimensions of 32 mm × 8 mm and is positioned such that a southern edge of the wire interface 8, which is the long edge, is flush with and runs parallel along a southern edge of the power supply board 94. In the example of Figure 5, the wire interface 8 is positioned centrally on the southern edge of the power supply board 94.

Mounted on the power supply board 94 to the immediate north of the wire interface 8 and having surface dimensions of 16 mm × 20 mm, is a relay component 78. The relay component is positioned such that its western edge runs parallel to the western edge of the adaptor board 96. The relay component 78 may be positioned such that its eastern edge is parallel with and longitudinally aligned with the western edge of the adaptor board 96. Alternatively, the eastern edge of the relay component 78 may have a longitudinal offset of 0 to 2 mm with respect to the western edge of the adaptor board 96.

The relay component 78 may be mounted on a power supply board 94 for a Wi-Fi module 1 which is designed to affect a functionality of a mechanism located in an existing body in which the Wi-Fi module 1 is to be implemented: a switch mechanism, for example. A relay component 78 is a type of switch component which, either electronically or electromechanically, controls the opening and closing of associated circuits.

Consider the particular example of Figure 3, which describes a retrofit Wi-Fi module 1 implemented in an existing switch mechanism 24, which is configured to control the state of an associated circuit, to which a device is connected. When the Wi-Fi module 1 is installed, the relay component 78 of the Wi-Fi module 1 controls the state of the associated circuit. In some examples, the relay 78 may, in response to a signal provided by the Wi-Fi chip 80, set the associated circuit to an 'on' state. Alternatively, in response to the switch mechanism 24 being manually turned to an 'on' state, the relay component 78 may similarly set the circuit to an 'on' state. Note that the same Wi-Fi chip 80 signals, or manual setting of states on the switch mechanism 24, may be applied to set the associated circuit to an 'off' state.

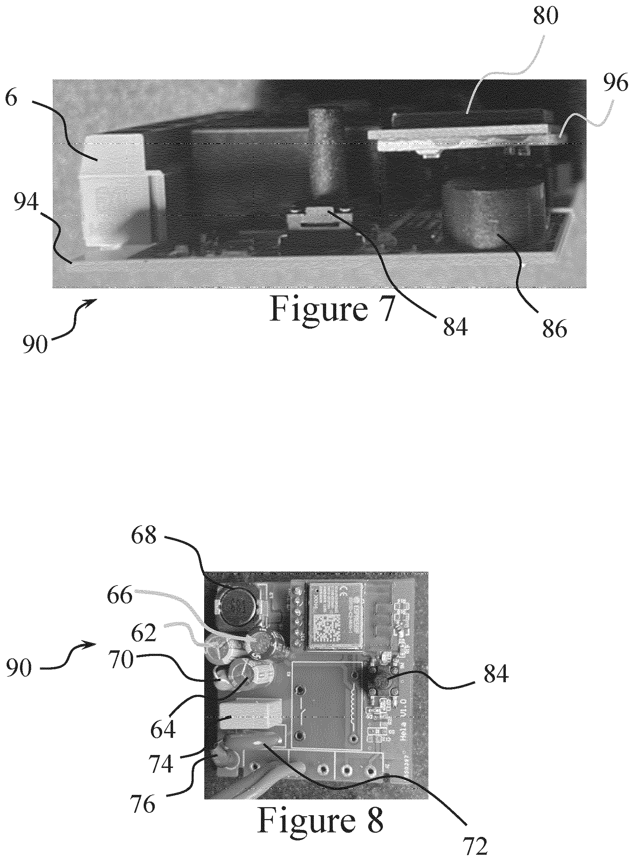

It will be appreciated that neither a relay component 78 nor a wire interface 8 may be needed in embodiments where the functionality of the existing mechanism, housed in an existing housing body, is not affected by the Wi-Fi module, as is described later with respect to Figure 8.

Still with reference to Figure 5, to the east of the relay component 78 is a button component 84, occupying a surface area of 6.5 mm × 6.5 mm on the surface of the power supply board 94. The northern edge of the button component 84 is parallel to and latitudinally aligned with the northern edge of the relay component 78. Note that, similar to the wire interface 8, physical access to the button component 84 is required when the Wi-Fi module circuitry 90 is mounted within a casing 2. The position of the button component 84 on the power supply board 94 is chosen such that the button component 84 aligns with the button access feature 6, which is provided on the casing 2 of the Wi-Fi module 1, as described with respect to Figures 1 and 2.

Figure 6 shows an alternative embodiment of the Wi-Fi module circuitry 90, instead comprising a single-core Wi-Fi chip 92 and a smaller sized adaptor board 96. Note that the positions, dimensions, and interconnections of all components in the Wi-Fi module circuitry 90 of Figure 6 may be identical to the embodiment of Figure 5, with the exception of the adaptor board 96 and the components mounted thereupon.

The adaptor board 96 of Figure 6 has dimensions of 16 mm × 16 mm and is positioned such that the eastern edge of the adaptor board 96 runs parallel along and is flush with the eastern edge of the relay component 78. The single-core Wi-Fi chip 92 shown in Figure 6 is a rectangular component and has dimensions of 18 mm × 16 mm. The single core Wi-Fi chip 92 includes an integrated antenna 82. In the example of Figure 6, the portion of the single-core Wi-Fi chip 92 on which the antenna 82 is provided has dimensions of 5 mm × 16 mm. The antenna portion of the single core Wi-Fi chip 92 is located on an eastern extreme of the Wi-Fi chip, such that the eastern edge of the antenna 82 forms an eastern edge of the Wi-Fi chip 80. Note that the antenna portion of the single core Wi-Fi chip 92 overhangs the eastern edge of the adaptor board 96 on which it is mounted.

Note that in contrast to the embodiment shown in Figure 5, the eastern edge of the single-core Wi-Fi chip 92 is not flush with the eastern edge of the power supply board 94 below. That is, there is a lateral offset of 5 mm between the eastern edge of the PCB 90 and the eastern edge of the antenna portion of the single core Wi-Fi chip 92.

Note that other chip sets could be provided. Different chip architectures are possible, for example dual core or quad core chips. Any suitable System on Chip (SoC or Wi-Fi chip) may be used to implement the processing functionality of the device.

Figure 7 shows the same exemplary Wi-Fi module circuitry 90 as is shown in Figure 5. In the example of Figure 7, the Wi-Fi module circuitry 90 is shown from its eastern side, which allows a view of the components in the vertical dimension (perpendicular from the plane of the power supply board 94). In the following description, the terms `north', 'south', 'east' and `west' will be used consistently with the description of Figure 5.

Vertically underneath the Wi-Fi chip 80, on the north-eastern extreme of the PCB 90 is mounted a clicker component 86. The clicker component is a cylindrical component with a circular surface being parallel to the plane of the power supply board 94, the diameter of said face being 8.5 mm. The clicker component 86 has a height of 5 mm, which is the distance by which the clicker component 86 protrudes vertically from the surface plane of the power supply board 94. An eastern portion of the Wi-Fi chip 80 is located vertically above the clicker component 86. Said portion of the Wi-Fi chip 80 is positioned 12 mm in the vertical direction from the plane of the power supply board 94. Note that the combined surface area of the Wi- Fi chip 80 and the adaptor board 96 is greater than the area *on* the power supply board 94 occupied by the clicker component. A western portion of the adaptor board 96, is used to mount the adaptor board 96 to a corresponding area on the power supply board 94 beneath.

The clicker component 86 is an optional component of the Wi-Fi module circuitry 90 and is used to provide audio feedback to user input to the Wi-Fi system of which the Wi-Fi module is a part. In some embodiments, the clicker module may not be present on the power supply board 94.Figure 8 shows another embodiment of the Wi-Fi module circuitry 90, which is designed to be mounted in a Wi-Fi module 1 which, when implemented in an existing housing body, does not affect a functionality of the existing mechanism intended to be housed in the existing housing body.

In the example of Figure 8, the power supply board 94 does not comprise a relay component 78, nor a designated wire interface 8. This is because the Wi-Fi module circuitry 90 of Figure 8 does not need to be connected to, nor control, an associated circuit; it needs only a power source. In Figure 8, wires providing electricity to the components of the Wi-Fi module circuitry 90 are directly soldered thereupon.

Figure 9 shows a wiring diagram for an exemplary Wi-Fi module 1. The module 1 of Figure 9 is intended for implementation in a switch housing, as shown in Figure 3. The wiring diagram of Figure 9 may be broken down into seven distinct circuits: Wi-Fi chip circuitry C3, a switch- mode power supply 116, a relay circuit 118, a switch-mode integrated circuit 120, an anti-static circuit 122, an LED power indicator circuit 117, and a pairing mode circuit 124. The diagram of Figure 9 is highly schematic, showing the individual electrical components in each distinct circuit, and representing the connections therebetween. Figure 9 does not accurately represent the spatial positioning of components in the Wi-Fi module 1, nor does the Figure show all connections in the module circuitry 90. In particular, the wiring diagram of Figure 9 omits, for clarity, certain connecting wires between the above-mentioned distinct circuits. There may be no need for a relay in such a module in cases where there is no need to control a control a provision of electricity to a functional circuit (e.g., a light bulb). In certain embodiments, the circuit takes power from the supply lines for the Wi-Fi sensing module and performs no other functions.

Figure 10 shows a wiring diagram for an exemplary Wi-Fi module 1 intended for implementation in a plug socket housing. There may be no need for a relay in such a module because there is no need to control a provision of electricity to a functional circuit (e.g., a light bulb).

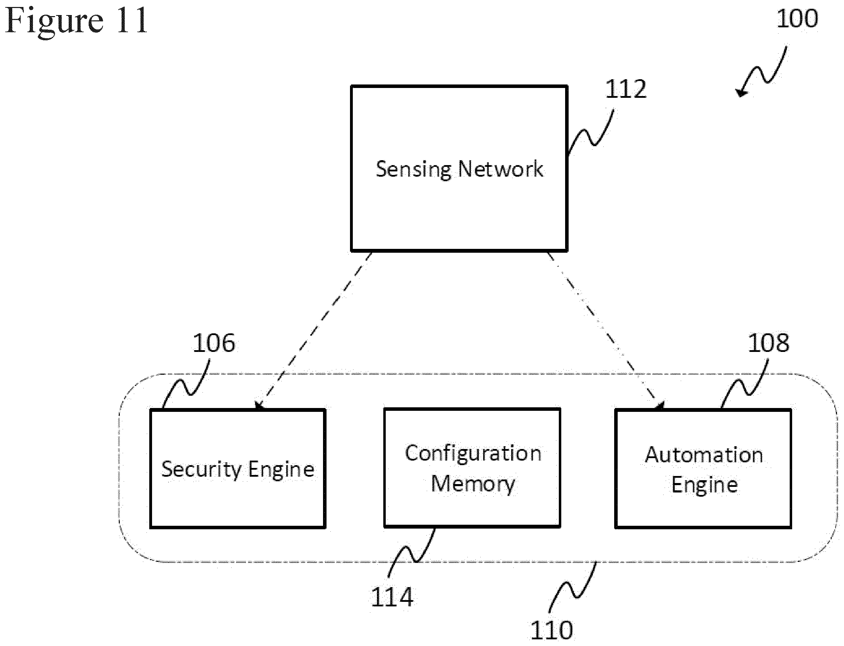

Figure 11 is a schematic diagram of a sensing system 100.

The system comprises a sensing network 112. The sensing network 112 is made up of a set of network devices, or nodes, which communicate with one another. Each node acts as at least one of a transmitter and a receiver device.

Nodes are grouped in sensing modes. There are two sensing modes in the example of Figure 11 - a first (security) sensing mode and a second (automation) sensing mode. A group of devices in the sensing network is configured to be in each of the two sensing modes. Note that the devices may also be set up for gesture detection for ' soft' control of devices controlled by a switch housing a Wi-Fi sensing module.

In order to set up a space housing such a system, each device needs to be identified and its location determined. There are different ways of achieving this. For example, a QR code could be located on the external housing within which each Wi-Fi device is incorporated. This would allow each Wi-Fi device to have a particular unique identity as indicated by the QR code. A QR code reader could then read the QR codes and identify each device. The location of a particular device could be determined in a number of ways, including by providing a Bluetooth link which enables geolocation of the device. In one exemplary embodiment, the Wi-Fi sensing module incorporates a near field communication (NFC) chip which allows the identity of the module to be determined without the need to read a QR code. This is advantageous, because where the Wi-Fi sensing module is enclosed in a housing, the QR code may not be reasonably accessible. Moreover, detection of the chip using an NFC module may allow for geo-location with more accuracy than using a Bluetooth link. An NFC reader can read the identifier from the NFC and thus enable the module to be correctly identified and located.

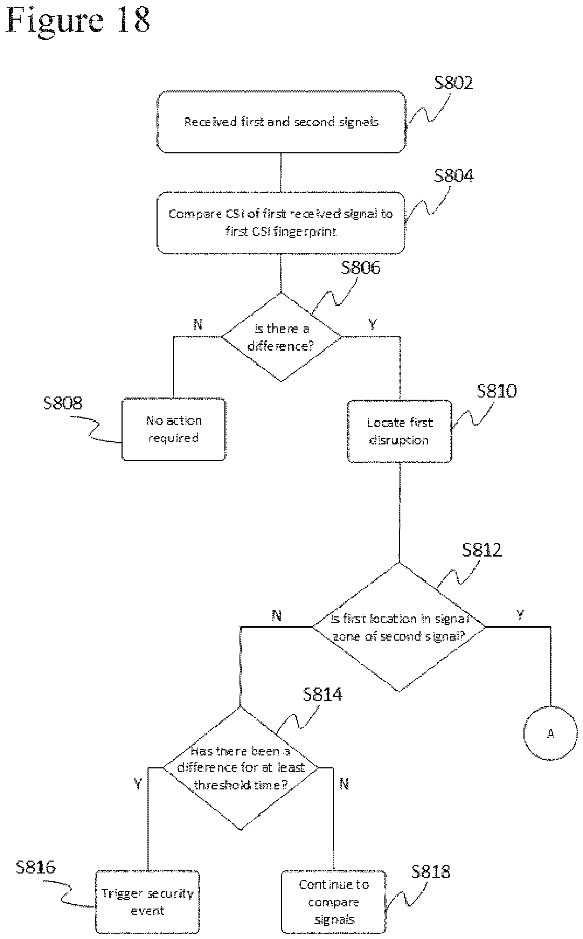

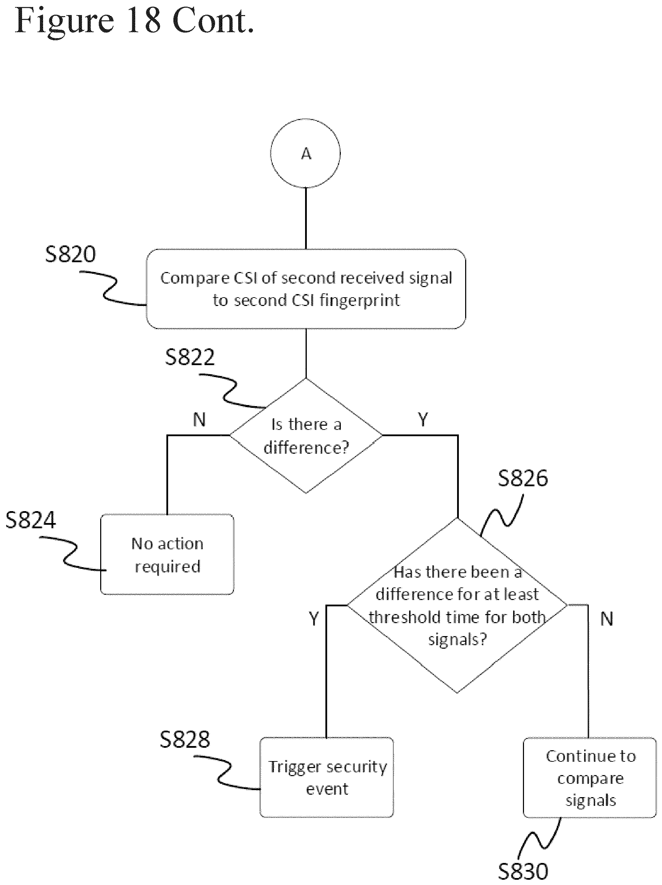

The system also comprises a first sensing mode engine, security engine 106, and a second sensing mode engine, automation engine 108. These sensing mode engines are implemented on a cloud computing environment 110. The cloud computing environment 110 is described in more detail below with reference to Figure 18. In essence, the cloud computing environment 110 comprises one or more remote servers which communicates with the mesh devices of the mesh network 112 via a network. The cloud computing environment 110 may also communicate, via the network, with a user device in order to provide information to a user of the device relating to the sensed data.

In some embodiments, the sensing mode engines are instead implemented at the receiver device or another processing device in the mesh network. The reliability of the system is improved if processing is implemented at mesh devices as a connection to the server in the cloud is not needed.

In some embodiments, each receiver device in the mesh network 112 executes a computer program on hardware which provides the sensing engine. In such an embodiment, the network devices are configured, as set out below, at the cloud computing environment 110, and subsequently run autonomously based on the configuration.

The mesh devices transmit and/or receive Wi-Fi signals. Characteristic data relating to the received signals are processed. They may be processed locally or sent to the cloud computing environment 110. The characteristic data is determined by a processor of the receiver device receiving the signal.

Once received at the cloud computing environment 110, the characteristic data relating to the signals received from devices in the security sensing mode is passed to the security engine 106, while that relating to the signals of the devices in the automation sensing mode is passed to the automation engine 108. The characteristics are analysed at the respective engines to determine whether to trigger security and/or environment automation events respectively, as described below. The characteristics may also be processed for gesture sensing to control the switch.

The sensing system 100 can be configured for different use cases using a configuration tool implemented at the cloud computing environment 110, and the mesh devices of the mesh network 112 can be configured to listen for signals from different transmitter devices based on the use case and/or device layout around the place. Herein, receiver devices are said to "listen to" a particular transmitter device or "listen for" signals from said transmitter device, meaning that the receiver is configured to receive and process signals from that particular transmitter device.

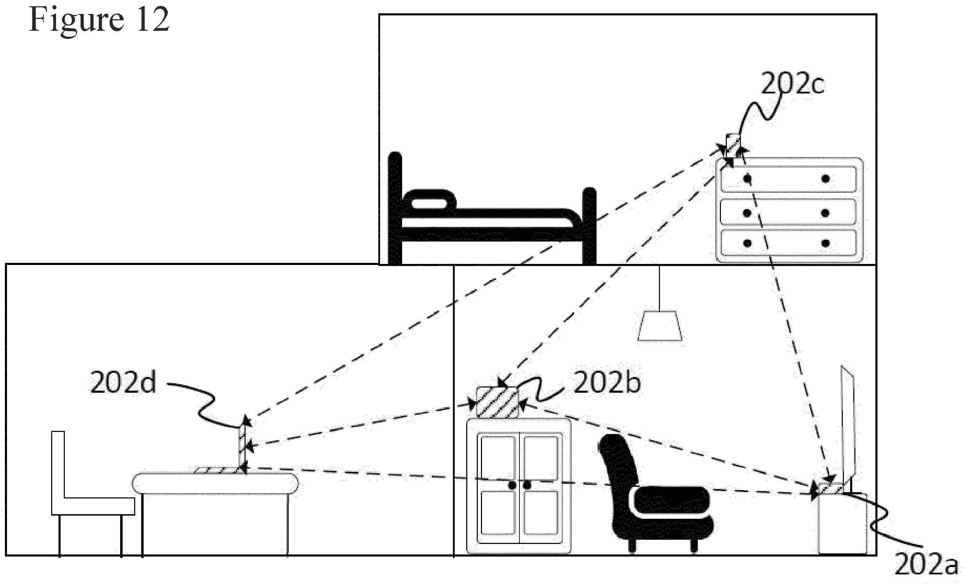

Figure 12 shows a house with three rooms, each room housing at least one network device 202a-d. The house of Figure 12 is an example "place" of the present disclosure, where a place is a region being sensed by the sensing network. There are two network devices 202a, 202b in the living room, and one device 202c, 202d in each of the bedroom and study respectively.

The network shown in Figure 12 has a full network topology, where each device 202a-d is in direct communication with each of the other devices 202a-d. Additionally, each of the devices 202a-d acts as both a transmitter and a receiver, as shown by the bi-directional arrows.

That is, for example, the device 202c in the bedroom receives signals from the two devices 202a, 202b in the living room and the device 202d in the study. It also transmits signals to each of the devices 202a, 202b, 202d. By placing network devices around the house, a mesh network can be configured which transmits signals between devices 202a-d such that the signals can be used to sense most, if not all, of the house.

Although the signals in Figure 12 are shown to be transmitted in a straight line between the transmitter and the receiver, at least part of each signal is reflected off surfaces, including furniture and walls.

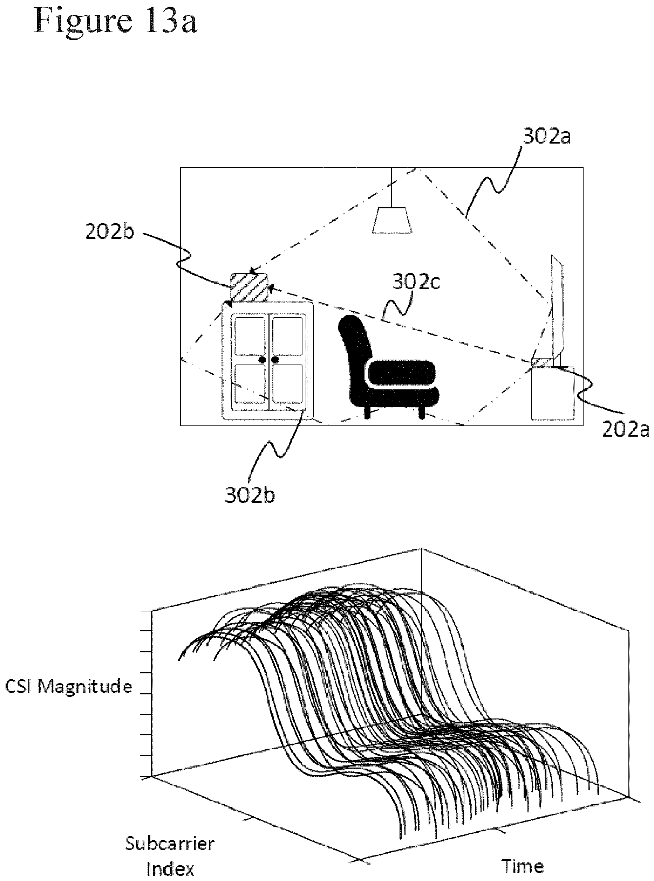

Figure 13A shows the living room in an "undisturbed state", i.e. the room is empty, with nothing moving in the room. Three signal paths 302a-c are shown between the device 202a and the device 202b. The device 202a is here configured as a transmitter device, while the device 202b is configured as a receiver device.

The first signal, following path 302a, is transmitted upwards and slightly right of the device 202a, reflecting off the surface of the TV, and then reflecting off the ceiling, before being received at the receiver device 202b. The second signal, following path 302b, is transmitted downwards and to the left of the transmitter device 202a, reflecting off the floor, followed by the base of the sofa, then by the floor again, followed by the left-hand wall, before being received at the receiver device 202b. The third signal, following path 302c, travels in an uninterrupted straight line from the transmitter device 202a to the receiver device 202b.

When the room is empty, each of these signals is considered a characteristic signal and the signal data a characteristic data representation of the indoor environment. That is, the characteristics of each of the signals received at the receiver device 202b relate to the layout of the room.

Figure 13A also shows a graph of channel state information (CSI) for the signal traversing path 302a which may be used to sense an entity in a room. The graph of Figure 13A shows a CSI magnitude over subcarrier index over time. It will be appreciated that the graph shown is provided for illustration purposes only.

The CSI is determined based on changes in both amplitude, phase, or both of the received signals. The CSI shown is that corresponding to the empty room and is therefore considered the characteristic data representative of the environment. This CSI is otherwise referred to herein as the CSI fingerprint. The signals shown in Figure 13A are characteristic signals as they represent the environment in an undisturbed or reference state. The CSI fingerprint is used for presence sensing. The CSI fingerprint may also be used for gesture sensing as described further herein.

The areas of the room, or house when communicating with devices 202c and 202d, which are sensed by the signals are referred to herein as signal zones.

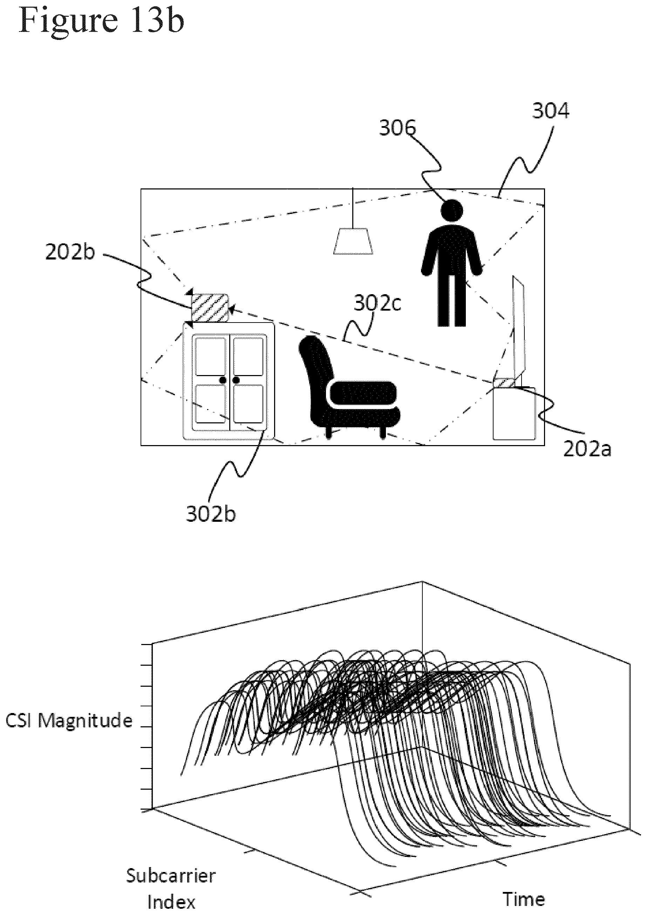

Figure 13B shows the same room with devices 202a and 202b when a person 306 is in the room. It can be seen that the signals traveling along paths 302b and 302c are undisturbed because the person 306 is not in the signal zone of either of these signals. That is, the person 306 is not in the signal paths 302b, 302c.

The signal which, when the room is empty, travels along path 302a has been disturbed. This signal now travels long path 304. This change in signal path results in a change in the characteristics of the signal, as shown by the graph in Figure 13B.

If the person 306 were to move within the room, the signal path would again change, and so also would the characteristics of the received signal. Motion of the person 306 is detected by comparing the characteristics of the most recently received signal to those of the previously received, or another recent but past signal.

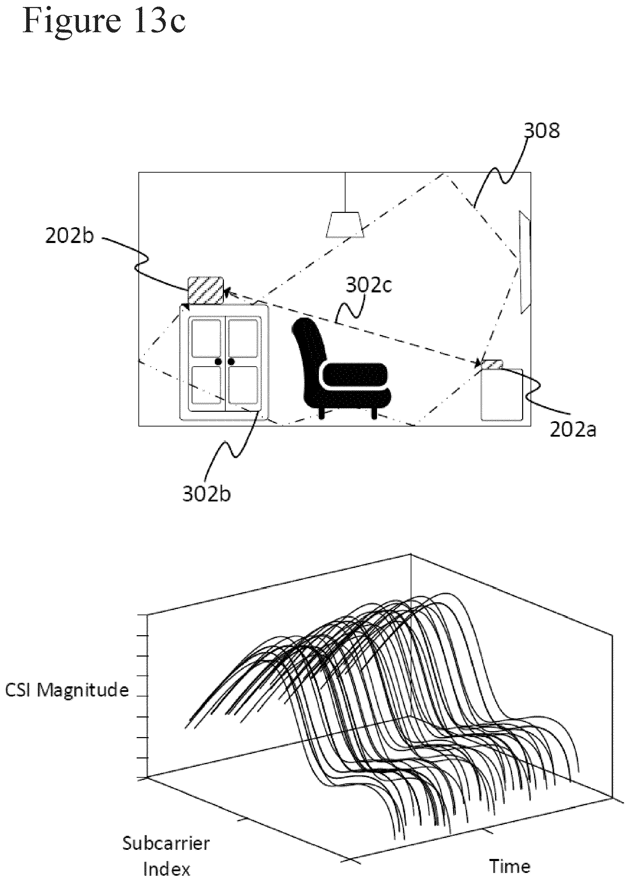

Figure 13C shows another example of a change in the signal path, and therefore signal characteristics. However, in this case, the signal path, and therefore characteristics, are changed due to a change in location of the TV. Since this change is a permanent change in the environment, the characteristic signal needs to be updated so that changes in the signal characteristics caused by a person being present can be determined. The method for updating the characteristic signal is described below.

As set out above, the devices 202a-d can be either transmitter devices, receiver devices, or may act as both transmitters and receivers.

A mesh network is a local network topology in which each device, or node, of the network has one or more paths connecting it directly to some or all of the other nodes of the network. In a full mesh network topology, every node is able to communicate directly to every other node of the network. In a partial mesh network topology, only some of the nodes can connect to one another. Mesh networks may be wired or wireless. That is, the mesh network devices may communicate sensed data detection results via wired or wireless means.

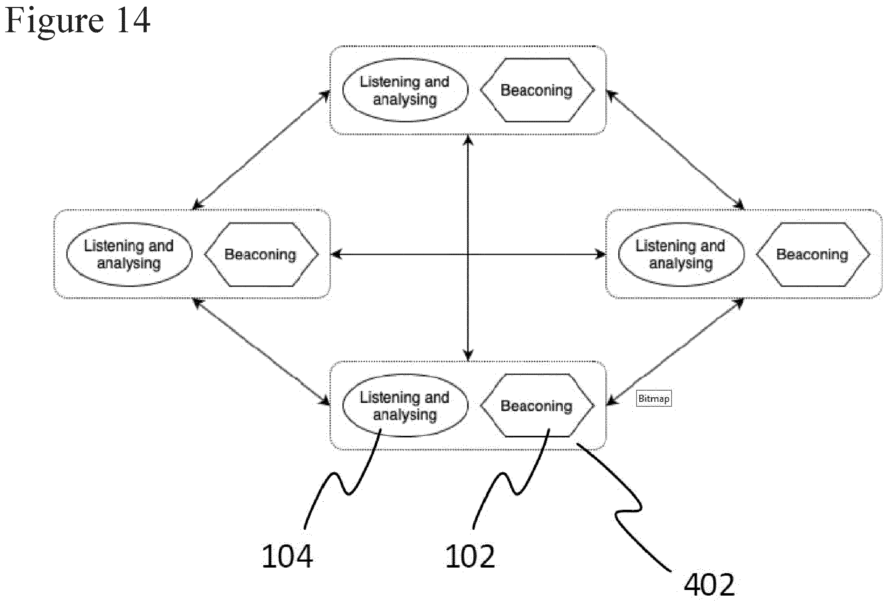

Figure 14 shows an embodiment of a mesh topology, in which at least some of the devices 402 can be configured to act as a receiver or a transmitter, depending on the configured use case. While it is possible to implement a mesh configuration as described herein using some or all dedicated transmitter or receiver devices, there are significant advantages to be gained where all devices can each be set up as either a transmitter or a receiver or both, depending on the configuration. Such a mesh network will be described herein by way of example.

The mesh network can be configured for different use cases: a security mode and an automation mode are described in the following.

Each mesh device 402 comprises both a receiver component 104 and a transmitter component

102. Each device 402 of the mesh topology may communicate directly with each of the other devices 402 of the network in a bi-directional manner, i.e. there is a transmit/receive path in each direction, but the receiver component 104 and transmitter component 102 of each device 402 need not both be activated. If both a mesh device 402 acts as both a receiver and a transmitter device, the receiver component 104 and transmitter component 102 can be activated simultaneously provided the mesh device 402 comprises the required hardware, i.e. at least two radios. As an alternative, which can be implemented if there is only one radio in the mesh device 402, the receiver component 104 and transmitter component 102 are activated concurrently, i.e. the radio is constantly altering between a transmitting and receiving state. In some embodiments, the mesh device 402 is in the receiving state the majority of the time.

In the mesh topology, there is no single point of failure. If one of the devices 402 fails, the other devices 402 can continue to communicate with one another and sense the areas traversed by their signals. If a device 402 fails, the failure is detected by a failure detection module of the sensing system. Upon detection of the failure, mesh forming as set out below is repeated to reform the sensing network.

The devices configured as transmitter devices may transmit beacon signals. Beacon signals transmitted from a single transmitter device are referred to as beacon streams.

The number of beacon streams each device 402 listens to can be configured to take into account the processing capability of the device 402. For example, if a device 402 has a lower processing capability, the device 402 can be configured to listen for only some of the beacon signals, and therefore reduce the number of signals being processed by said device.

As an additional advantage, a mesh network allows the motion between all devices to be sensed and monitored, by configuring different pairs of devices.

When the transmitter component 102 is activated, the mesh device is configured as a transmitter, and when the receiver component 104 is activated, the mesh device is configured as a receiver. In this embodiment, both components may be activated at the same time in a single device, as is the case in the example of Figure 14C.

By way of example, the system is implemented using a mesh architecture in which there are at least *n* devices, each device being both a transmitter and receiver, within a building comprising multiple rooms such as that shown in Figure 12, where the building is the place. Each device listens to *n* incoming streams. Of the *n* streams, the device listens to 1 device located within the same room, and *n*-1 devices from other parts of the building. If no devices are available in the same room, the device listens to *n* devices from other rooms.

Each mesh device may implement the sensing engines. In such an embodiment, the number of devices *n* to which a particular device listens to may depend on a processing power of the device, such that the amount of data the device is required to process does not exceed the processing resources of the device.

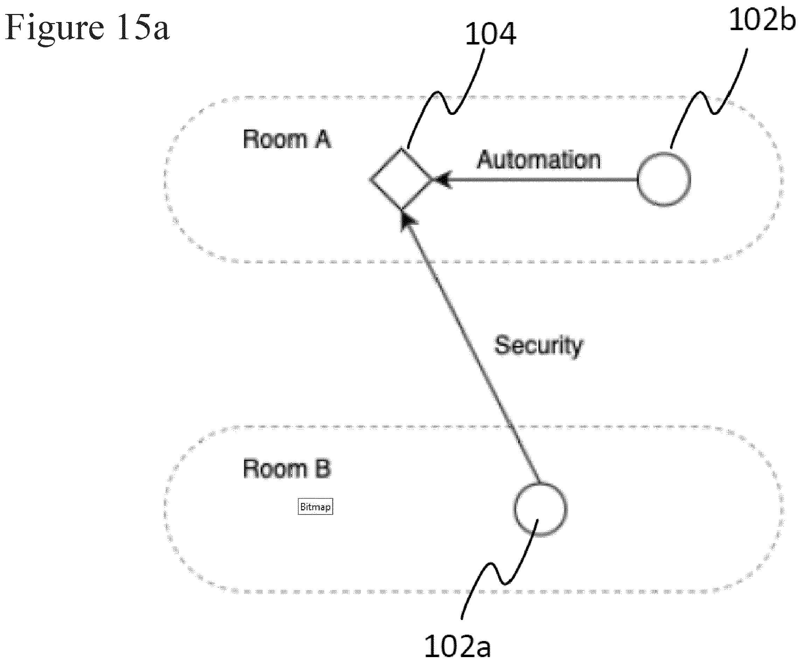

Figures 15A-C show some example configurations formed via the mesh forming process. In each example, the devices are shown to act only as either a transmitter or receiver for ease of illustration. Additionally, only three devices are shown in each example. In each example, the user may receive an indication of the activated modes via the user interface, such as by a visual indication or other displayed message.

Figure 15A shows the receiver device 104 located in room A along with transmitter device 102b. The receiver 104 and transmitter 102b are configured in the automation sensing mode since they are in the same room. The second transmitter device 102a is located in room B, such that the receiver 104 and transmitter device 102a are configured in the security sensing mode. Therefore, both the security engine 106 and the automation engine 108 are active.

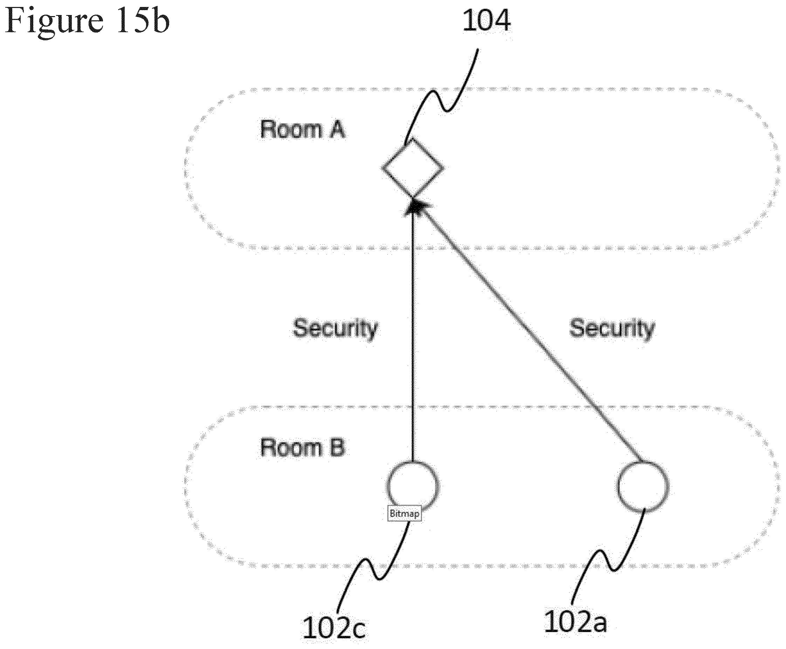

Figure 15B shows the receiver device 104 located in room A with both transmitter devices 102a, 102b located in room B. Therefore, the receiver device 104 is configured in the security sensing mode with both of the transmitter devices 102a, 102b, such that the automation engine 108 is not active while the security engine 106 is active. This state may be referred to as a degraded state since only one use case is enabled. The user is informed if such a configuration is found.

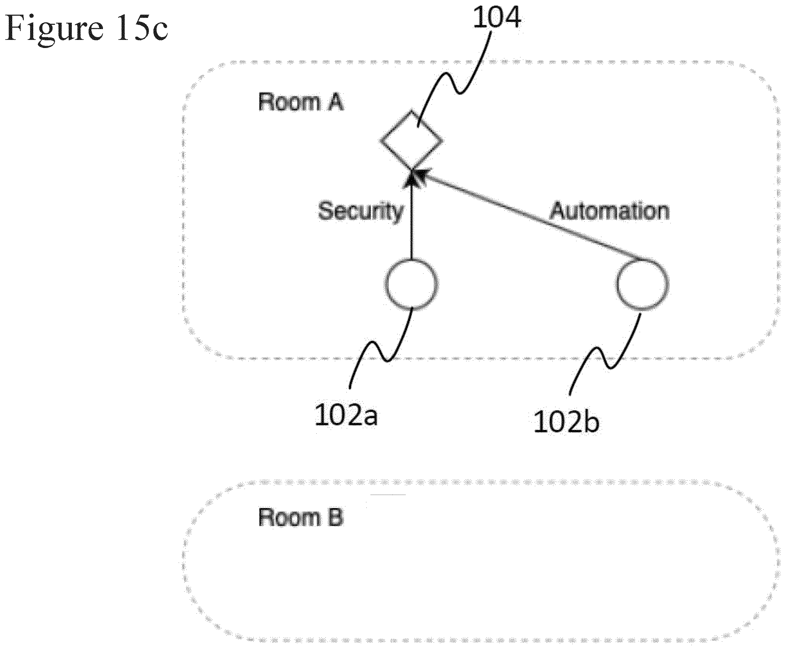

Figure 15C shows a second degraded state. All three devices 102a, 102b, 104 are located in room A. While both the security engine 106 and the automation engine 108 are active in this scenario, security is limited as room B is unlikely to be covered by the sensing system.

The automation sensing mode is, in the above-mentioned examples, only implemented if there are two devices 102, 104 in the same room. This is to avoid error-prone calculations to detect the presence and/or location of a person based on cross-room motion detection. However, it will be appreciated that the automation sensing mode may be implemented using devices in different rooms.

The system is "self-healing". That is, if one of the network devices is faulty or is removed from service, the remaining devices are reconfigured. That is, step 2 of the method set out above is repeated for each of the network devices in order to determine the current best suited *n* devices from which receiver device is to receive signals.

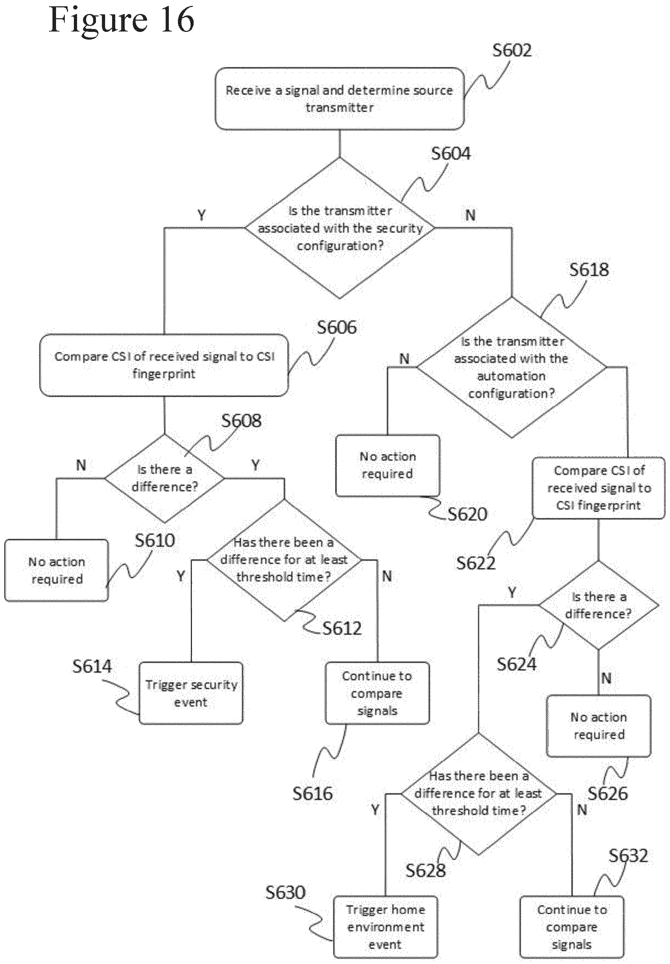

Figure 16 provides an example method for using the system to trigger security and environment automation events.

At step S602, a signal is received at the receiver device. At step S604, it is determined by accessing the configuration memory whether the transmitter-receiver pair are in the security sensing mode. The configuration memory may store device identifiers for each transmitter-receiver pair. The signal transmitted from the transmitter device comprises the identifier of the transmitter device. This, along with the identifier of the receiver device, are used to determine the sensing mode.

If the transmitter-receiver pair are in the security sensing mode, the CSI of the received signal is compared, by the security engine, to the CSI fingerprint of the characteristic signal, step S606, the CSI fingerprint being stored in a computer memory location accessible to the security engine. One possible way of implementing the comparison uses a Pearson similarity coefficient. Other possibilities are known in the art and may be implemented. If there is no difference between the CSIs, as determined at step S608, no action is required, S610, as there is no intruder disturbing the path of the signal.

However, if it is determined at step S608 that there is a difference between the CSI of the received signal and the CSI fingerprint, the time for which there has been a difference is compared to a threshold security time period. This time of difference may be determined based on a number of CSI windows received which indicate a difference. Alternatively, data from an internal clock, which may be periodically synchronized with the internet time, of the mesh device corresponding to a time at which the signals were received may be used. CSI windows are CSI values for a defined time period of the received signal. For example, a window may correspond to 100ms, such that the CSI window corresponds to the CSI value for the receive signal for the most recent 100ms. A current window refers to the window of most recently received CSI values. The CSI fingerprint has been derived from one or more past CSI window in which the zone is unoccupied.

If there has been a difference for a time exceeding the threshold security time period, the security event is triggered, S614. If, instead, the time has not exceeded the threshold, the signals continue to be monitored, step S616. The threshold security time period is in the region of 5- 10 seconds. By ensuring that there is a minimum period over which there is a difference in the CSI between the current window and the characteristic fingerprint, the number of false positives is reduced while still allowing for the security event to be implemented within a reasonable time frame for security.

Examples of security events which may be triggered include: generating an alarm sound; transmitting an alert to a security computer system; and transmitting an alert to the client device of the user of the sensing system, altering them to the security breach.

Returning to step S604, if it is instead determined that the transmitter-receiver pair are not in the security sensing mode, it is determined if they are in the automation sensing mode, step S618. If they are not, the transmitter-receiver pair were not meshed during mesh forming and therefore no action is required, S620.

However, if the transmitter-receiver pair are found to be in the automation sensing mode, the CSI of the received signal is compared, by the automation engine, to the CSI fingerprint of the characteristic signal, S622, the CSI fingerprint being stored in a memory location accessible to the automation engine. If there is no difference between the CSIs, as determined at step S624, no action is required, S626, as there is no person disturbing the path of the signal.

If, instead, it is determined at step S624 that there is a difference between the CSI of the received signal and the CSI fingerprint, the time for which there has been a difference is compared to a threshold automation time period. As above, the CSI window may be used to determine the time of difference.

If there has been a difference for a time exceeding the threshold automation time period, a home environment automation event is triggered, step S630. If, instead, the time has not exceeded the threshold, the signals continue to be monitored, step S632.

The threshold automation time period is less than the threshold security time period. This is because automation is time critical. The threshold automation time period is in the region is 100ms to 1 second. By requiring only a short period over which there is a difference in the CSI, automation events may be implemented quickly. A small number of false positives is tolerable with automation, and therefore a relatively short threshold time period is preferable.

Some example environment automation events which may be triggered include: adjusting a light; adjusting a heating unit; adjusting an air conditioning unit; locking/unlocking a door; and adjusting an electrical appliance.

The automation engine may determine a motion statistic indicating an amount of motion captured by the difference between the CSI of the signal and the CSI fingerprint. The home environment automation event is then triggered if the motion statistic exceeds a motion threshold. The motion statistic provides a way to avoid detections, and thus triggering effects, due to movements other than humans. For example, changes in CSI values are larger for humans than for animals. The motion threshold depends on the configuration and location of the devices. For example, the motion threshold may be low if the location of the device is not optimal. Conversely, if there are pets in the place which may trigger automation events, the motion threshold may be higher.

It will be appreciated that the steps of Figure 16 are provided by way of example, and may be performed in parallel or in a different order. For example, steps S604 and S618 may be replaced with a single step of determining the sensing mode.

In the example of Figure 16, the CSI of the received signal is compared to the CSI fingerprint. This method is used to determine the presence of a person or other entity. In other embodiments, the CSI of the received signal is compared to a previous CSI window. That is, at steps S606 and S622, the CSI of the received signal is compared to the CSI of the previous CSI window, or some other recent window. For example, the CSI of the received signal may be compared to the CSI of a signal received within the last 5 seconds. By comparing the CSI to the CSI of a recent by previous signal, motion can be detected. As set out above, movement of the person affects the CSI and therefore changes in the CSI values of recent signals indicates movement. The recent CSI window can also be used for presence detection. In the embodiment using the recent CSI window, the CSI fingerprint need not be determined or stored. Instead, the recent CSI values are stored. CSI values may be stored at the configuration memory 114 and may be stored for a predefined period of time. The CSI values may be stored with an indication of time, for example a time at which the signal from which the CSI is derived was received.

The event to be triggered may be predefined, such that the event is dependent on the transmitter-receiver pair. Alternatively, the event may be based on a determined location of disruption, i.e. the location of the person in the room. In this case, there is an additional step in the method of Figure 16 of determining a location of disruption of the signal, that is the location of the person, and triggering the event based on the determined location. There may be a location-event database which stores events to be triggered in association with the location of a person which triggers the event. The location of disturbance can be determined from the CSI of the received signal. Since the CSI of the signal depend on the signal path, which in turn depends on the location of any objects in the characteristic path, the location of said objects can be determined.

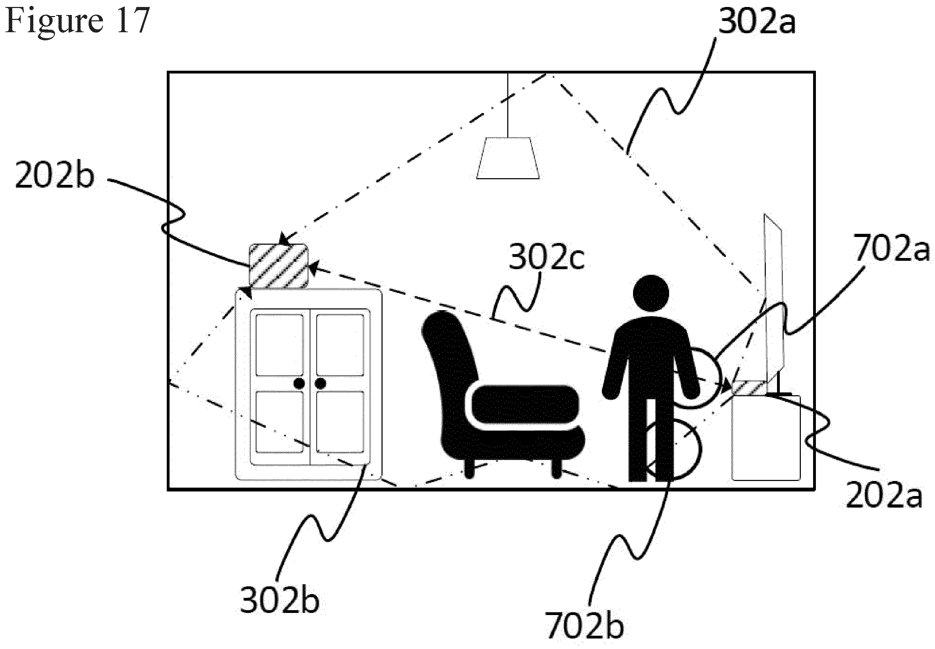

In some instances, a person may disturb multiple signals being transmitted from a particular transmitter 202a to a receiver 202b. Figure 17 shows an example in which a person is stood in the paths 302b, 302c of the characteristic signals.

In this case, the signals come into contact with the person at locations 702a and 702b. Although not shows in Figure 17, this would cause the signals to be reflected and therefore the signal paths to be altered, resulting in a change in CSI values of the signals received at the receiver device 202b.

The distortion of CSI values for multiple paths can be used to check that any change in CSI is actually caused by the presence of an entity, rather than being an anomaly, and therefore reduce the number of false positives. Figure 18 shows an example method for using two signals between two devices to determine whether to trigger a security event. It will be appreciated that the method could be used in a different sensing mode.

At step S802, first and second signals are received at the receiver device. The CSI of the first signal is compared to the fingerprint CSI, S804. If it is determined at step S806 that there is no difference between the CSI, there is no entity disrupting the signal and therefore no action is required, S808.

However, if it is determined that there is a difference in CSI at step S806, the location of the disturbance is determined from the CSI at step S810. The location of disturbance is determined based on the CSI patterns of the received signal. Disturbances at different locations result in different CSI patterns. Localisation using CSI data is known in the art, as disclosed in Rui Zhou, Xiang Lu, Pengbiao Zhao, and Jiesong Chen. 2017. Device-free Presence Detection and Localization With SVM and CSI Fingerprinting. IEEE Sensors Journal 17, 23 (Dec 2017), 7990-7999. https://doi.org/10.1109/JSEN.2017. 2762428.

Once the disruption has been located, it is determined at step S812 if the location of the disruption falls within the signal zone of the second signal. That is, it is determined if there should also be a disruption in the second signal.

If the disruption is outside the signal zone of the second signal, the second signal can be ignored as it provides no useful information regarding the presence of the person. In this case, the time that there has been a difference in the CSI of the first signal is compared to the threshold security time period, step S814, to determine if the time of difference exceeds the threshold. If it has, the security event is triggered at step S816. If it has not, the signals continue to be monitored, step S818.

If, on the other hand, the location of disturbance is found to be within the signal zone of the second signal, a disruption in the second signal is to be expected. The CSI of the second signal is compared to the CSI fingerprint of the characteristic second signal at step S820, and determined at step S822 if there is a difference in CSI.

If there is no difference for the second signal, the disruption detected in the first signal is likely an anomaly and therefore no action is required, step S824. If however there is a difference for the second signal, this is confirmation of an entity being present.

At step S826, it is determined whether each of the first and second signals have had differences in CSI for at least the threshold security time period. If the threshold time period has not been met for each of the signals, the signals continue to be monitored, S830. If instead, the signals have had different CSIs for a time exceeding the thresholds, the security event is triggered, step S828. The method is also performed for the second signal, i.e. first processing the second signal to see if there is a disruption and then checking to see if the disruption is in the signal zone of the first signal. It will be apricated that the processing of the signals can be run concurrently.

The same threshold security time period may be used for both the first and second signal, or there may be a first and second threshold security time period which are different. The threshold security time periods used when two signals are used as in the method of Figure 18 may be shorter than that when there is only a single signal used. The threshold time periods may depend on the location of the sensed person. For example, as a person moves from one location to another, the person may initially only be in the signal zone of one signal, but move such that they are in an overlapping zone. The threshold security time period used for the second signal may be shorter than that of the first, in keeping with the movement of the person through the sensing zones.

While the method of Figure 18 is described in the context of signals transmitted between two devices, the same concept can be used for signals between three devices.

Taking, for example, a receiver device which receives signals from two different transmitter devices. If there is an area of overlap in the signal zones of the first and second transmitters when communicating with the receiver, the disruption of one of the signals in this area of overlap can be checked with the other signal. The method of Figure 18 is used, with the first and second signals being received from first and second transmitter devices.

That is, if both the first and second transmitter devices are configured with the receiver device in the same sensing mode, the sensing mode engine:
1. compares the CSI of the first signal to the CSI fingerprint, and determines a location of disruption;
2. compares the CSI of the second signal to the CSI fingerprint;
3. determines if the location of disruption is in the signal zone of the second signal, i.e. if a disruption in the second signal is expected;
4. if the location of disruption is in the signal zone of the second signal
   a. triggers the event if there is a disruption in the second signal; and
   b. prevents the event if there is not a disruption in the second signal; and
5. if the location of disruption is not in the signal zone of the second signal
6. triggers the event.

Here, the first signal is that transmitted from the first transmitter device and the second signal is that transmitted from the second transmitter device. The method is also performed based on the second signal.

It will be noted that here the steps of comparing the CSI of the second signal is described before determining if the disruption detected in the first signal is in the signal zone of the second signal. This is an alternative to the method of Figure 18 which may be implemented. That is, steps S820 and S822 are performed before step S810.

As set out with respect to Figure 16, the CSI values may be compared to the CSI of a recent but past signal, for example the previous CSI window.

The security engine may also determine a motion statistic and only trigger the security event if the motion statistic of each signal exceeds a threshold security motion statistic. Motion statistics are discussed above with reference to the automation engine. It will be appreciated that the same concept can be applied to any sensing mode engine.

In another example, the same transmitter device may transmit signals to multiple receiver devices. If there is an area of overlap in the signal zones of the transmitter device when communicating with the first and second receiver devices, the disruption of one of the signals in this area of overlap can be checked with the other signal. Again, the method of Figure 18 is used, with the first and second signals being received from first transmitter device at the first and second receiver devices.

That is, if both the first and second receiver devices are configured with the transmitter device in the same sensing mode, the sensing mode engine:
1. compares the CSI of the first signal to the CSI fingerprint, and determines a location of disruption;
2. compares the CSI of the second signal to the CSI fingerprint;
3. determines if the location of disruption is in the signal zone of the second signal, i.e. if a disruption in the second signal is expected;
4. if the location of disruption is in the signal zone of the second signal
   a. if the location of disruption is in the signal zone of the second signal triggers the event if there is a disruption in the second signal; and
   b. prevents the event if there is not a disruption in the second signal; and
5. if the location of disruption is not in the signal zone of the second signal
6. triggers the event.

Here, the first signal is that received at the first receiver device and the second signal is that received at the second receiver device. As above, the method is also performed replacing the first signal with the second signal and vice versa.

As an alternative, the method of Figure 18 may be modified such that the location of disruption, if any, for each signal is determined, and then it is determined if the locations are substantially the same. Whether to trigger the action is based on whether the location is the same.

It will be appreciated that the method of Figure 18 can extend to any number of signals between any number of nodes, provided there is some overlap in the area sensed by the signals.

Where the event is based on the signals received at multiple different receivers, the analysis to determine whether to trigger the event or not, i.e. the steps of determining if the disruption falls in the signal zone of another signal and, based on the analysis of the two signals, whether to trigger the event, is performed by a central processing device. This central processing device may be located at the cloud computing environment, a designated one of the receiver devices, or another assigned device in the network.

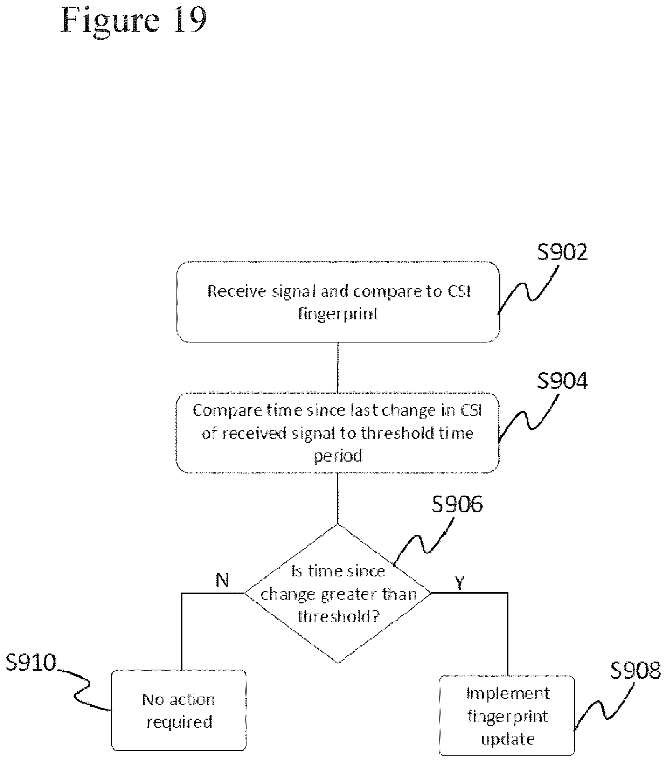

As set out with respect to Figure 13C, there may be instances in which the CSI fingerprint needs to be updated in order to account for a change in the environment, such as moved furniture. Figure 19 shows an example method for updating the CSI fingerprint. This method can be implemented by any sensing mode engine. Updating the CSI fingerprint is required for embodiments of presence detection which compare the CSI of the received signal to the CSI fingerprint.

At step S902, the signal is received at the transmitter device and compared to the CSI fingerprint, as described above.

The time since a last change in CSI of the received signal is determined. This time may be determined for example, using a timestamp of the received signal. When a signal is received, it, or its CSI values, is stored in a temporary storage location accessible to the sensing mode engine along with an indication of the time the signal was received. When the next signal is received from the same transmitter device, its CSI is compared to that of the stored signal. If the CIS values are the same, the previously received signal remains stored. If, on the other hand, the CSI values are different, the most recently received signal is stored in the temporary store. The timestamp of the signal stored in the temporary storage location is used to determine a time since the last change in the signal. This time represents a "no-motion" time, i.e. a time in which there has been no motion in the signal zone.

The time since last change is compared to a threshold update time period at step S904. If it is determined at step S906 that the no-motion time is less than the threshold update time period, no action is required, step S910.

If instead, it is found at step S906 that the no-motion time exceeds the threshold update time, a fingerprint update is implemented, step S908. During the fingerprint update, the CSI values of the characteristic signal stored in the memory accessible to sensing mode engine are replaced with those of the current signal, or the signal stored in the temporary storage location which is the same as the current signal.

A similar method as that shown in Figure 19 can be used by the automation sensing mode engine to reverse a home environment automation event. In this instance, the threshold time period is a reverse event time period, and instead of implementing a fingerprint update at step S908, the reverse home environment automation event is triggered. If, for example, the home environment automation event triggered by the presence of a person in a room is turning on the lights, the reverse home environment automation event would be turning off the lights.

The signals processed by the sensing mode engines may be received and processed continuously. Alternatively, signals may be sampled at predefined intervals.

In the example system presented herein, there are two sensing modes. It will be appreciated that any number of sensing modes may be implemented in the system.

In the method described herein, CSI values of signals are used to sense the presence of an entity. However, it will be appreciated that other characteristics of the received signals may be used to sense the entity.

A user of the system is able to select devices to be configured in a particular sensing mode. For example, the user may wish for devices within a bathroom to be in a fall detection sensing mode, while devices in a drawing room to be in a security sensing mode. The user can provide these preferences to the configuration tool via a user interface of the configuration tool. The configuration tool, when selecting the devices for a particular device to listen to in each mode, takes the user preferences into account.

The step of determining if there is a difference in CSI values in any of the methods described above may comprise calculating a similarity (or difference) score. The CIS values may be deemed to be different only if the similarity score exceeds a threshold.

CSI value extraction and evaluation can be implemented in a variety of ways. For example, artificial intelligence models can be used to extract CSI data from received signals and/or analyse the CSI data to determine if it indicates the presence of a person. In another embodiment, an algorithm is run which accesses a memory storing the CSI fingerprint and compares the CIS of the received signal with the fingerprint. Other processing techniques known in the art may additionally or alternatively be used, such as time and/or frequency domain processing, smoothing, de-noising, filtering, quantization, thresholding, and transforming.

The CSI data may also be utilised to implement gesture sensing. A gesture sensing algorithm may be executed on the processor in order to detect gestures for controlling the switch. For example, a gesture may be a movement of a person's hand going from up to down to indicate that a switch should be turned on, or from down to up to indicate that switch should be turned off. Other gestures could also be utilised, for example to reduce the light output of the switch where the module is incorporated in dimmer switches. For example, a hand gesture of rotation to the right or left could indicate an increase or decrease respectively of the light output from a dimmer switch. A gesture data memory may be provided which stores fingerprints associated with such gestures. When CSI data is received and compared with the gesture memory, a match may be obtained where a particular is recognised. For example, if a user moves his hand from the up to the down position, the CSI data representative of the interruption to the Wi-Fi signals of this gesture is compared with fingerprints in the memory. A match is indicated with the CSI fingerprint denoting that the switch should be turned off. Once a gesture has been recognised, the processor instructs the appropriate circuit within the switch to physically control the switch itself.

This enables soft control of a switch so that a user may activate the switch or control the light output of the lighting device controlled by the switch using only gestures and without having to touch the toggles switch of the switch itself. It would be appreciated that other applications of gesture sensing may be utilised depending on the device which the switch controls.

Other Wi-Fi sensed data could alternatively be used, such as RSSI (received signal strength indication) data. Gesture sensing has been studied, for example in Abdelnasser *et al*: "WiGest: A Ubiquitous Wi-Fi-Based Gesture Recognition System", which describes a system that leverages changes in Wi-Fi signal strength to sense in-air hand gestures around the user's mobile device. Gesture recognition is also discussed in Tan *et al*: "WiFinger: Leveraging Commodity Wi-Fi for Fine-Grained Finger Gesture Recognition", which takes advantages of the fine-grained Channel State Information (CSI) available from commodity Wi-Fi devices and the prevalence of Wi-Fi network infrastructures.

In the system described above, with reference to Figure 19, the receiver in the automation sensing mode listens to only a single transmitter. It will be appreciated that this is provided by way of example only. In other systems each sensing mode may comprise a set of any number of mesh devices.

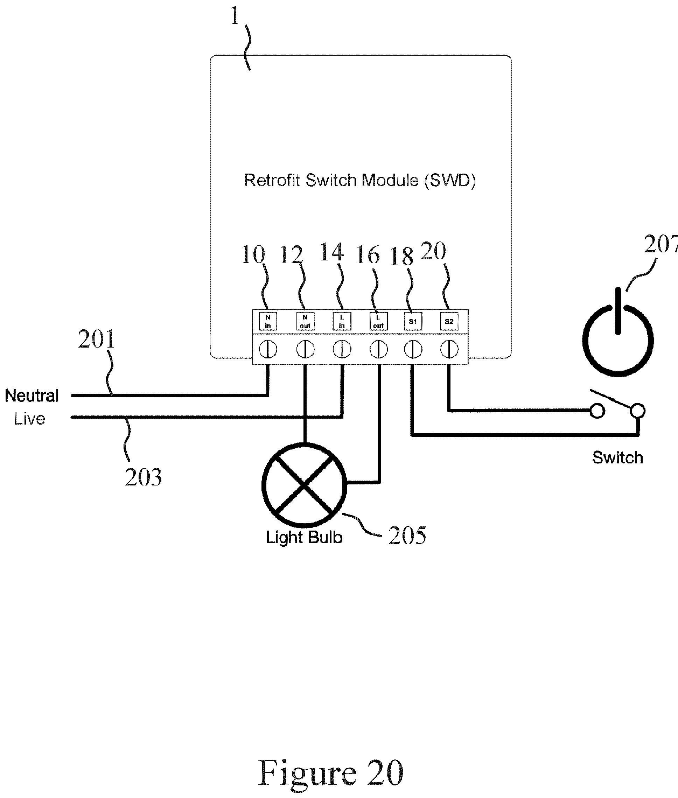

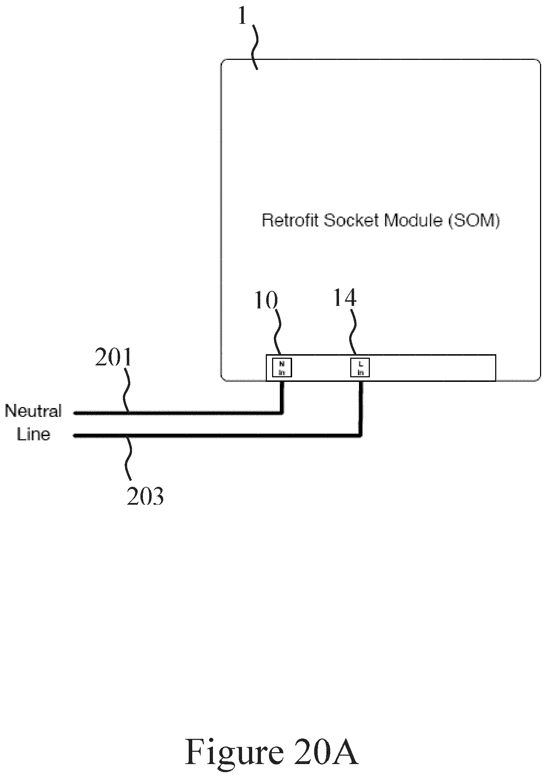

Figure 20 shows a highly schematic diagram illustrating an exemplary configuration of wired connections between a power source, a Wi-Fi module as described herein, a functional circuit, and a switch mechanism. In the particular example of Figure 20, the module 1 is implemented in an existing switch housing which further houses a switch mechanism for controlling a light bulb. The module 1 receives power from a same power source as would otherwise supply the light bulb. However, the received power is received by the module 1, directed from the module 1 to the bulb, and a state of the bulb is controlled by a switch mechanism which is powered by wires connected to switch terminals of the module 1.

A neutral-in wire 201 is connected from a power source to a neutral-in terminal 10 in a wire interface 8 of the Wi-Fi module 1. A live wire 203 is connected from the power source to a live-in terminal 14 of the wire interface 8. Neutral-out and live-out wires connect respective neutral-out and live-out terminals 12, 14 of the wire interface 8 to a functional circuit, which in the example of Figure 20 is constituted by a light bulb circuit. It will be appreciated that other functional circuits may instead be connected to the neutral-out terminal 14 and live-out terminal 16.

Two switch control wires connect respective first and second switch terminals 18, 20 to the switch circuitry 207, which may operate in one of a plurality of states to control a state of the light bulb 205, or other functional circuit. Whilst Figure 20 illustrates an example of a 2-state, on-off switch to control a respective on-off state of the light bulb 205, it will be appreciated that other switch and state control mechanisms such as dimmers may be implemented in some embodiments.

Figure 20A shows a highly schematic diagram illustrating an exemplary configuration of wired connections between a power source, and a Wi-Fi module 1 as described herein, wherein the Wi-Fi module is configured to be implemented in an existing socket.

A neutral-in wire 201 is connected from a power source to a neutral-in terminal 10 in a wire interface 8 of the Wi-Fi module 1. A live wire 203 is connected from the power source to a live-in terminal 14 of the wire interface 8.

Connections from other terminals of the wire interface are not required in the example of Figure 20A because implementation in an existing socket means that there is no functional circuit to control, and therefore no need for a mechanism to control such a functional circuit. The module is merely connected to a power source that is available within the socket housing in which the module is implemented.

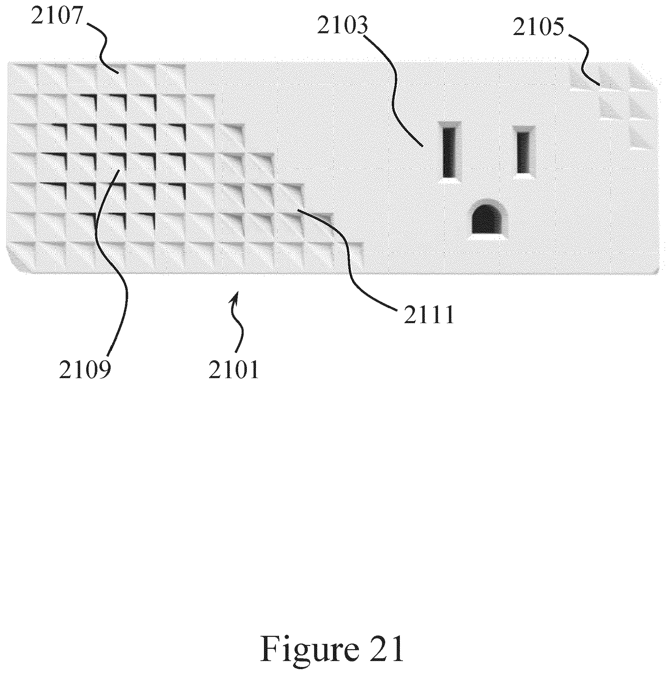

Figure 21 shows an example device 2101. For example, the device 2101 of Figure 21 may be used as one of the mesh devices previously described. For consistency with the earlier description, the terms north, south, east, west are used to denote orientation/location of parts of the device when viewing the device of Figure 21 in plan view.

The device 2101 of Figure 21 comprises a security and multi-sensing device, as previously described in this application. For example, the device of Figure 21 can detect motion of persons (or other animals or objects) as previously described.

In the example of Figure 21, the device 2101 is generally rectangular in profile. At an eastern side of the device there is a socket portion 2103. The socket portion 2103 can accommodate a plug, for example a mains power plug, or indeed any other type of plug.

In examples, the device of Figure 21 comprises one or more textured regions. In the example of Figure 21 the device comprises a first textured region 2105 at the north-eastern region of the device. A second textured region 2107 extends from approximately the middle of the device 2101 towards the west side of the device. In some examples the textured regions may comprise a series of notches, indentations, or scallops.

In some examples, the device 2101 of Figure 21 comprises a speaker. In some examples, a sound outlet 2109 of the speaker may be comprised in the second textured region 2107.

In some examples, the device 2101 of Figure 21 comprises an illuminated portion 2111 that may comprise one or more lights or LEDs. In some examples, the illuminated portion 2111 is comprised in the second textured region 2107. In some examples, the illuminated portion 2111 can be illuminated in one or more different colours. In some examples, a colour of illumination is used to indicate a status of the device 2101 e.g., "on", "offline", etc.

As previously described with respect to the devices earlier in the description, the device 2101 of Figure 21 may be sold as part of a set or a kit. For example, the set or kit may comprise two or more such devices 2101. One or more devices 2101 from the kit may be set-up as a transmitter device, and one or more devices from the kit may be set-up as a receiver device. Thus, when set-up, device(s) 2101 as shown in Figure 21 may provide an intelligent plug with Wi-Fi sensing capacity.

Although the above disclosure relates to the detection of a person, the methods and system disclosed herein may be used to detect any foreign entity, including animals and inanimate objects.

The place used in the examples presented above is a house. The place may be any environment for which wireless signals may be used to sense entities. Such environments include an indoor environment such as a house, office, or hospital, or an outdoor environment, including open- air environments with barriers (manmade or natural), enclosed environments, and underground environments.

In some embodiments, the place is divided into "zones". The mesh devices within each zone may be configured in sensing modes dependent on the zone. Within a building, zones may be a single room or a group of rooms, and may be on a single floor or spread over multiple floors.

Another application of the sensing system described herein is the monitoring of elderly and vulnerable people in their homes. Hospitals and elderly care facilities can use Wi-Fi sensors to monitor patient movement and biometric data like heartbeats, breathing, and limb movements.

The example system described herein uses Wi-Fi signals in order to sense an entity which is not a constant in the place. However, it will be appreciated that other wireless signals may be used in the same system to achieve the effect of flexible sensing for a variety of sensing modes, while maintaining an order of privacy.

The mesh devices in the above embodiment may be provided by the retrofit modules described herein. All devices in the mesh network run software for the sensing system and have hardware which should be compatible to be able to extract CSI data.

In the embodiment in which the mesh network comprises only dedicated devices, the user may not be required to select any devices for the mesh network - step 1 of the mesh forming method set out above. In such an embodiment, only dedicated devices are used and therefore no user selection is required.

It should be appreciated that embodiments may be deployed in different system architectures. For example, the sensing engines may be implemented as a computer program that is stored in the memory 1110 of the user device 1008. In another system architecture, the configuration memory and/or the sensing mode engines are stored at the server 1002, and implemented by a processor do the server 1002. Sensing information is then provided by the network 1004 to the suer device 1008 for providing to the user via the user interface.

According to an aspect of the present invention, there is provided a sensing system for monitoring a place, the system comprising: a plurality of mesh devices located in the place, wherein each mesh device comprises a transmitter component which, when activated, configures the mesh device as a transmitter, and a receiver component which, when activated, configures the mesh device as a receiver, wherein at least two of the mesh devices have activated receiver components; wherein each mesh device having an activated receiver component is configured, by a configuration tool, to receive sensed data for processing from at least one other selected mesh device of the plurality of mesh devices, the selected mesh device selected by the configuration tool and having an activated transmitter component, the sensed data generated from a wireless signal transmitted by the transmitter device and received by each receiver device over a wireless communication medium.

The system disclosed herein provides a scalable, configurable, and adjustable architecture for sensing within a place.

In some embodiments, the configuration tool may be implemented at a first receiver device, wherein the configuration tool may be operable to: select the at least one other mesh device to transmit to the first receiver device; and configure the first receiver device to receive sensed data for processing from the selected at least one other mesh device.

In some embodiments, the system may further comprise a remote computing server, wherein the configuration tool may be implemented at the remote computing server, wherein the configuration tool may be operable to, for each of the receiver devices: select the at least one other mesh device having an activated transmitter component; and configure the receiver device to receive sensed data for processing from the selected at least one other mesh device.

In some embodiments, the system may further comprise a sensing mode engine for processing the sensed data in a sensing mode.

In some embodiments, the sensing mode engine may be configured to: compare the received sensed data to previous sensed data to determine if there is a difference between the received sensed data and the previous sensed data; and if it is determined that there is a difference between the received sensed data and the previous sensed data representative, trigger a response action.

In some embodiments, the sensing mode engine may be further configured to: determine if the difference has pertained for a time period exceeding a threshold sensing mode time period; and trigger the response action if the time period exceeds the threshold sensing mode time period.

In some embodiments, the sensing mode engine may be implemented at a remote computing server.

In some embodiments, each of the receiver devices may be configured to implement the sensing mode engine.

In some embodiments, the system may further comprise a second sensing mode engine for processing the sensed data in a second sensing mode.

In some embodiments, for each of the selected mesh devices, one or more of the sensing mode and the second sensing mode may be selected by the configuration tool for processing the sensed data.

In some embodiments, at least one of the plurality of mesh devices may have an activated receiver component and an activated transmitter component.

In some embodiments, the system may comprise the configuration tool, wherein the configuration tool may be configured to select the at least one other mesh device based on a configuration criterion, wherein the configuration criterion defines a threshold signal characteristic.

In some embodiments, the system may further comprise a second sensing mode engine for processing the sensed data in a second sensing mode, wherein the configuration criterion is different for the sensing mode and the second sensing mode.

In some embodiments, the system may comprise the configuration tool, wherein the configuration tool may be configured to select the at least one other mesh device based on a transmitter device selected for another receiver device of the sensing system.

In some embodiments, the system may comprise the configuration tool, wherein the configuration tool may be configured to select the at least one other mesh device based on a processing power of the receiver device.

In some embodiments, the configuration tool may be further configured to: determine that a mesh device is not connected to a network; determine at least one mesh device, having an activated receiver component and an activated transmitter component and connected to the network, receiving signals from the disconnected mesh device; and configure the at least one mesh device as a proxy device, wherein the proxy device is configured to transmit data packets to the disconnected mesh device and receive sensed data for processing from the disconnected mesh device.

In some embodiments, the configuration tool may be further configured to: determine that a mesh device is not connected to a network based on a signal received from the disconnected mesh device at the first receiver device; and configure the first receiver device as a proxy device, wherein the proxy device is configured to transmit data packets to the disconnected mesh device and receive sensed data for processing from the disconnected mesh device.

In some embodiments, the configuration tool may be further configured to determine if a characteristic of the signal received from the disconnected mesh device meets a proxy criterion and configuring the receiver device as the proxy device if the proxy criterion is met.

In some embodiments, the configuration tool may be further configured to determine if a characteristic of the signal received from the disconnected mesh device meets a proxy criterion and configuring the first receiver device as the proxy device if the proxy criterion is met.

In some embodiments, the sensing mode engine may be configured to determine a location of disturbance within the place based on the difference between the received sensed data and the previous sensed data.

In some embodiments, the sensing mode engine may be configured to trigger the response action taking into account received sensed data transmitted from a second transmitter device.

According to a second aspect of the present invention, there is provided a computer- implemented method comprising steps performed to implement the functionality of a system for monitoring a place, the system comprising a plurality of mesh devices located in the place, wherein each mesh device comprises a transmitter component which, when activated, configures the mesh device as a transmitter, and a receiver component which, when activated, configures the mesh device as a receiver, wherein at least two of the mesh devices have activated receiver components, wherein each receiver device is configured, by a configuration tool, to receive sensed data for processing from at least one other selected mesh device of the plurality of mesh devices, the selected mesh device selected by the configuration tool and having an activated transmitter component, the sensed data generated from a wireless signal transmitted by the transmitter device and received by each receiver device over a wireless communication medium, the method comprising: selecting the at least one other mesh device; and configuring the receiver device to receive sensed data for processing from the selected other mesh device.

According to a third aspect of the present invention, there is provided a computer program, stored on a non-transitory computer-readable storage media, and configured when executed on one or more processors, to implement the functionality of a system for monitoring a place, the system comprising a plurality of mesh devices located in the place, wherein each mesh device comprises a transmitter component which, when activated, configures the mesh device as a transmitter, and a receiver component which, when activated, configures the mesh device as a receiver, wherein at least two of the mesh devices have activated receiver components, wherein each receiver device is configured, by a configuration tool, to receive sensed data for processing from at least one other selected mesh device of the plurality of mesh devices, the selected mesh device selected by the configuration tool and having an activated transmitter component, the sensed data generated from a wireless signal transmitted by the transmitter device and received by each receiver device over a wireless communication medium.

According to a fourth aspect of the present invention, there is provided a computing device for configuring a sensing system for monitoring a place, the computer system comprising a plurality of mesh devices located in the place, wherein each mesh device comprises a transmitter component which, when activated, configures the mesh device as a transmitter, and a receiver component which, when activated, configures the mesh device as a receiver, wherein at least two of the mesh devices have activated receiver components, wherein each receiver device is configured, by a configuration tool, to receive sensed data for processing from at least one other selected mesh device of the plurality of mesh devices, the selected mesh device selected by the configuration tool and having an activated transmitter component, the sensed data generated from a wireless signal transmitted by the transmitter device and received by each receiver device over a wireless communication medium, the computer device comprising: at least one processor; and a memory storing instructions, which, when implemented on the at least one processor, cause the at least one processor to: select the at least one other mesh device; and configure the receiver device to receive sensed data for processing from the selected other mesh device."

It will be appreciated that the above embodiments have been described only by way of example. Other variations and applications of the present invention will be apparent to the person skilled in the art in view of the teaching presented herein. The present invention is not limited by the described embodiments, but only by the accompanying claims.

## Claims

1. A method of retrofitting a Wi-Fi sensing module into a switch or socket housing, the housing having at least one electrical wire for providing power, the method comprising:
removing a cover from the housing to reveal a space within the housing and the at least one electrical wire;
inserting a retrofittable Wi-Fi sensing module into the space and connecting an electrical connector of the Wi-Fi module to the at least one electrical wire; and
securing the cover to the housing to fully conceal the Wi-Fi sensing module.

2. The method of claim 1, wherein the housing is a switch housing which comprises at least one further electrical wire, the at least one electrical wire and the at least one further electrical wire being connected to provide a power circuit to a device under control by the switch, the switch housing further comprising a toggle for selectively making and breaking the electrical circuit for selectively controlling the delivery of power to a device under control of the switch.

3. The method of claim 2, wherein the Wi-Fi sensing module comprises a relay which is connected in the electrical circuit for overriding the toggle of the switch, the relay under control of circuitry on the Wi-Fi sensing module.

4. The method of claim 1, wherein the at least one electrical wire may be connected to one connector of a socket and at least one further electrical wire may be connected to another connector of the socket, the method further comprising additionally connecting the at least one electrical wire and the further electrical wire to respective connectors of the Wi-Fi module to provide power to the Wi-Fi module.

5. The method of claims 1, 2 or 3, comprising connecting the Wi-Fi sensing module in the power circuit via the at least one electrical wire of the housing.

6. A method of retrofitting Wi-Fi sensing modules in an environment, the environment comprising a switch housing and a socket housing, each of the switch housing and socket housing having at least one electrical wire for providing power, the method comprising:
removing a first cover from the switch housing to reveal a space within the switch housing and the at least one electrical wire of the switch housing;
inserting a first retrofittable Wi-Fi sensing module into the space revealed in the switch housing and connecting an electrical connector of the Wi-Fi sensing module to the at least one electrical wire of the switch housing;
securing the first cover to the switch housing;
removing a second cover from the socket housing to reveal a space within the socket housing and at least one electrical wire of the socket housing;
inserting a second retrofittable Wi-Fi sensing module into the space of the socket housing and connecting an electrical connector of the Wi-Fi module to the at least one electrical wire of the socket housing; and
securing the second cover to the socket housing.

7. A retrofittable Wi-Fi sensing module comprising:
a casing configured to fit within the space of a switch or socket housing, the casing enclosing Wi-Fi sensing module components comprising:
a processor configured to execute Wi-Fi sensing software for processing Wi-Fi data for the purpose of detecting presence and/or motion in an environment in which the switch or socket housing is located;
an antenna for transmitting and receiving Wi-Fi data between the Wi-Fi sensing module and the environment; and
an electrical connector for connecting the Wi-Fi sensing module to the at least one electrical wire of the housing.

8. The retrofittable Wi-Fi sending module of claim 7, comprising circuitry for generating an alert in the event of a power shortage on the at least one electrical wire.

9. The retrofittable Wi-Fi sending module of claim 7 or 8, comprising a relay connected in an electrical circuit for controlling a device connected in the circuit and external of the housing.

10. The retrofittable Wi-Fi sensing module of any of claims 7 to 9, comprising an NFC chipset, the NFC chipset enabling commissioning of the retrofittable Wi-Fi sensing module by proximity remote detection.

11. The retrofittable Wi-Fi sensing module of claim of any of claims 7 to 10, comprising an audio feedback generator configured under the control of the processor for generating audio feedback responsive to sensed activity of a user.

12. The retrofittable Wi-Fi sensing module of any of claims 7 to 11, wherein the module components are mounted on a circuit board having planar dimensions of no greater than 50 mm by 50 mm.

13. The retrofittable Wi-Fi sensing module of any of claims 7-11, wherein the circuit board has planar dimensions of no greater than 42mm × 42 mm.

14. The retrofittable Wi-Fi sensing module of claim 9, configured to perform a method of controlling a power supply to the device connected in the circuit and external of the housing, the method comprising:
receiving, at the antenna, Wi-Fi sensing data of the environment in which the device is located;
processing, by the processor, the Wi-Fi sensing data to recognise one or more gesture made by a user in the environment; and
based on the recognised gesture, controlling the actions of the electrical relay to interrupt the power supply to the device.

15. The retrofittable Wi-Fi sensing module of claim 9, wherein the device connected in the circuit and external of the housing comprises one of: lighting, heating, air conditioning, curtains/blinds, a sound system (AV), or an air purifier.
